# EUROPEAN PATENT APPLICATION

(11) **EP 4 262 264 A1**
(43) Date of publication of application: **18.10.2023**
(21) Application number: 20967937.2
(22) Date of filing: 31.12.2020
(51) Int. Cl.: H04W 24/04

(54) **MEASUREMENT METHOD, SCHEDULING METHOD, AND RELATED APPARATUS**

(71) Applicant: Huawei Technologies Co., Ltd., Shenzhen, Guangdong 518129 (CN)
(72) Inventor: ZHANG, Li, Shenzhen, Guangdong 518129 (CN); HAN, Jing, Shenzhen, Guangdong 518129 (CN); LI, Hong, Shenzhen, Guangdong 518129 (CN); SHEN, Zhongyi, Shenzhen, Guangdong 518129 (CN)
(74) Representative: Grünecker Patent- und Rechtsanwälte PartG mbB
(86) International application number: PCT/CN2020/142557
(87) International publication number: WO 2022/141599

(57) **Abstract**

This application provides a measurement method and a related apparatus. The measurement method includes: A terminal device determines whether a measurement gap is involved when each of one or more measurement objects is measured in a first bandwidth part group, where the first BWP group includes an active BWP of one or more serving cells of the terminal device. The terminal device performs measurement-gap-based measurement or non-measurement-gap-based measurement based on a determining result. This helps avoid unnecessary interruption when the terminal device switches a BWP, and helps improve data transmission efficiency.

## Description

### TECHNICAL FIELD

This application relates to the field of wireless communication technologies, and in particular, to a measurement method, a scheduling method, and a related apparatus.

### BACKGROUND

In a related technology, to measure a measurement object, a terminal device needs to tune a radio frequency from a serving cell to an object frequency. In other words, the terminal device needs to switch the radio frequency from an active (active) BWP to bandwidth for covering the measurement object, resulting data interruption between the terminal device and the serving cell in a period of time. The measurement object may be, for example, a time-frequency position of a reference signal of a cell on a frequency that the terminal device needs to measure. A network device configures a measurement gap (measurement gap, MG) for the terminal device, and parameters corresponding to the measurement gap MG include a measurement gap length (measurement gap length, MGL) and a measurement gap repetition period (measurement gap repetition period, MGRP). When the terminal device measures the measurement object, within the MGL, the terminal device may not perform sending or receiving in the serving cell, and the network device usually does not schedule the terminal device.

However, in some cases, when measuring the measurement object, the terminal device does not need to switch the radio frequency. For example, if the frequency of the measurement object is in the active (active) BWP of the terminal device, the terminal device does not need to perform MG-based measurement, and the terminal device may continue to normally perform data transmission with the serving cell. If the network device still schedules the terminal device based on the configured MG, and does not schedule the terminal device within the MGL, causing unnecessary data interruption and affecting data transmission efficiency.

### SUMMARY

This application provides a measurement method, a scheduling method, and a related apparatus, to help improve data transmission efficiency.

According to a first aspect, this application provides a measurement method, including: A terminal device determines whether a measurement gap is involved when each of one or more measurement objects is measured in a first bandwidth part BWP group, where the first BWP group includes an active BWP of one or more serving cells of the terminal device. The terminal device performs measurement-gap-based measurement or non-measurement-gap-based measurement based on a determining result.

That a terminal device determines whether a measurement gap is involved (involved) when each of one or more measurement objects is measured in a first bandwidth part BWP group may alternatively be understood as that the terminal device determines whether the measurement interval is involved or needed (needed) when the terminal device works in the first bandwidth part BWP group and measures each of the one or more measurement objects.

The measurement-gap-based measurement may be understood as that measurement of the terminal device needs the measurement gap or involves the measurement gap. Within measurement gap duration, the one or more measurement objects are measured, and data transmission between the terminal device and the serving cell is interrupted. The measurement-gap-based measurement may also be referred to as gap (gap)-based measurement.

The non-measurement-gap-based measurement may be understood as that measurement of the terminal device does not need the measurement gap or does not involve the measurement gap. When the terminal device measures the one or more measurement objects, data transmission between the terminal device and the serving cell is not interrupted. The non-measurement-gap-based measurement may also be referred to as no-gap (no-gap) measurement.

When switching a BWP to each BWP in the first BWP group, the terminal device may perform measurement-gap-based measurement or non-measurement-gap-based measurement.

According to the technical solution in this application, the terminal device can determine, based on a measurement gap requirement proposed when the terminal device actually measures the measurement object, whether to perform measurement-gap-based measurement. This can help avoid unnecessary interruption when the terminal device switches the BWP, and help data transmission efficiency.

In some possible implementations, that the terminal device performs measurement-gap-based measurement or non-measurement-gap-based measurement based on a determining result includes: The terminal device performs non-measurement-gap-based measurement if none of the one or more measurement objects involves the measurement gap.

It may be understood that, if the MG is not needed or is not involved for each measurement object when the terminal device measures the one or more measurement objects in a first BWP, it may be determined that measurement performed by the terminal device on the one or more measurement objects does not need the MG, or in other words, does not involve the MG. When the measurement performed by the terminal device on the one or more measurement objects does not need the MG, or in other words, does not involve the MG, the terminal device and a first network device may determine that the MG does not take effect.

In this way, the terminal device may perform non-MG-based measurement. This helps avoid unnecessary data interruption between the terminal device and the network device.

In some other possible implementations, that the terminal device performs measurement-gap-based measurement or non-measurement-gap-based measurement based on a determining result includes: The terminal device performs measurement-gap-based measurement if at least one of the one or more measurement objects involves the measurement gap.

It may be understood that, if one of the one or more measurement objects involves the MG when the terminal device measures the one or more measurement objects in the first BWP, it may be determined that measurement performed by the terminal device on the one or more measurement objects needs the MG, or in other words, involves the MG, so that it is determined that the terminal device performs MG-based measurement when measuring the one or more measurement objects in the first BWP. The measurement performed by the terminal device on the one or more measurement objects needs the MG, or in other words, involves the MG, the terminal device and the first network device may determine that the MG takes effective. In this way, when measurement of the at least one of the one or more measurement objects needs the MG, the terminal device may perform MG-based measurement.

Specifically, that the terminal device performs measurement-gap-based measurement if at least one of the one or more measurement objects involves the measurement gap includes: If the at least one of the one or more measurement objects involves the measurement gap, the terminal device determines, based on measurement gap information corresponding to the one or more measurement objects, a first measurement gap pattern for measuring the one or more measurement objects. The terminal device performs measurement-gap-based measurement based on the first measurement gap pattern.

In this way, the first measurement gap pattern for measuring the one or more measurement objects is determined based on the measurement gap information corresponding to the one or more measurement objects, so that an MG requirement proposed when the terminal device measures each of the one or more measurement objects in the first bandwidth part BWP group can be comprehensively considered. The first measurement gap pattern obtained in such a manner can better satisfy an actual measurement requirement, help avoid data interruption caused by an unnecessary measurement gap, and help avoid a packet loss caused by an excessively short measurement gap length.

In some optional implementations, the measurement gap information corresponding to the one or more measurement objects includes a measurement gap length and a measurement gap repetition period of each of the one or more measurement objects, and the first measurement gap pattern includes a first measurement gap length and a first measurement gap period; and
if measurement of the one or more measurement objects supports switching between at least two measurement gap patterns, that the terminal device determines, based on measurement gap information corresponding to the one or more measurement objects, a first measurement gap pattern for measuring the one or more measurement objects includes: The terminal device determines the first measurement gap length based on the measurement gap length corresponding to the one or more measurement objects, and determines the first measurement gap period based on the measurement gap period corresponding to the one or more measurement objects. For example, the first measurement gap length is a largest value in the measurement gap length corresponding to the one or more measurement objects, and the first measurement gap period is a smallest value in the measurement gap period corresponding to the one or more measurement objects.

In this way, it can be ensured that the first measurement gap length and the first measurement gap period that are used by a first terminal for measurement can satisfy a requirement of measuring each of the one or more measurement objects by the terminal device, and the network device does not schedule the terminal device within the first measurement gap length. This helps the terminal device better measure the one or more measurement objects, and avoids the packet loss caused by the excessively short measurement gap length.

In some optional implementations, the measurement gap information corresponding to the one or more measurement objects includes a measurement gap pattern of the one or more measurement objects; and if measurement of the one or more measurement objects supports only switching between the no-measurement-gap measurement and the measurement-gap-based measurement that is performed based on a measurement gap pattern, that the terminal device determines, based on measurement gap information corresponding to the one or more measurement objects, a first measurement gap pattern for measuring the one or more measurement objects includes: The terminal device determines, based on the measurement gap information corresponding to the one or more measurement objects, that the first measurement gap pattern is the measurement gap pattern in the measurement gap information corresponding to the one or more measurement objects.

In this way, measurement performed by the terminal device on the measurement object supports only two measurement manners: One is performing non-MG-based measurement, and the other is performing MG-based measurement based on a measurement gap pattern configured by the network device. In other words, in this case, the measurement performed by the terminal device on the measurement object supports only switching between no-gap and gap, but does not support switching between different measurement gap patterns.

In some possible implementations, before the terminal device determines, based on the measurement gap information corresponding to the one or more measurement objects, the first measurement gap pattern for measuring the one or more measurement objects, the method further includes: The terminal device receives first indication information sent by a first network device, where the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern. In this way, the terminal device can obtain information indicating whether switching between different measurement gap patterns can be performed.

In some possible implementations, the method further includes: The terminal device receives second indication information sent by the first network device, where the second indication information indicates the measurement gap information corresponding to the one or more measurement objects. In this way, the terminal device and the first network device determine the first measurement pattern based on same measurement gap information corresponding to the one or more measurement objects, and the measurement gap information is aligned between the terminal device and the network device, so that the terminal device and the network device obtain a same first measurement pattern.

In some possible implementations, dual connections are established between the terminal device and both the first network device and a second network device, and the method further includes: The terminal device sends measurement gap configuration information corresponding to a measurement object group to the first network device, where a measurement object in the measurement object group is configured by the second network device, and the measurement gap configuration information corresponding to the measurement object group includes that measurement of the measurement object in the measurement object group does not involve the measurement gap, or includes measurement gap information corresponding to the measurement object in the measurement object group.

For example, the first network device may not have information about one or more measurement objects that the second network device needs to measure. As a result, whether the one or more measurement objects configured by the second network device need the measurement gap cannot be determined. In this case, the terminal device may send, to the first network device, the measurement gap information of the measurement object that the second network device needs to measure.

In some possible implementations, the dual connections are established between the terminal device and both the first network device and the second network device, and the method further includes: The terminal device sends measurement indication information to the second network device, where the measurement indication information indicates that measurement performed by the terminal device on none of the one or more measurement objects in the first BWP group involves the measurement gap, or indicates the first measurement gap pattern used by the terminal device to measure the one or more measurement objects in the first BWP group.

According to a second aspect, an implementation of this application provides a measurement method, including:

A terminal device receives first measurement indication information sent by a first network device, where the first measurement indication information indicates the terminal device to measure one or more measurement objects in a first BWP group without involving a measurement gap, or indicates a first measurement gap pattern to be used by the terminal device to measure one or more measurement objects in a first BWP group, and the first BWP group includes an active BWP of one or more serving cells of the terminal device. The terminal device performs measurement-gap-based measurement or non-measurement-gap-based measurement based on the measurement indication information.

In such a technical solution, the terminal device and the network device use a same policy to determine whether measurement of the terminal device is based on the MG. In this way, information can be aligned between the terminal device and the network device.

In some possible implementations, that the terminal device performs measurement-gap-based measurement or non-measurement-gap-based measurement based on the measurement indication information includes: The terminal device performs non-measurement-gap-based measurement if the indication information indicates the terminal device to measure the one or more measurement objects in the first BWP group without involving the measurement gap.

In some other possible implementations, that the terminal device performs measurement-gap-based measurement or non-measurement-gap-based measurement based on the measurement indication information includes: The terminal device performs measurement-gap-based measurement based on the first measurement gap pattern if the indication information indicates the first measurement gap pattern to be used by the terminal device to measure the one or more measurement objects in the first BWP group.

Optionally, dual connections are established between the terminal device and both the first network device and a second network device, and the method further includes: The terminal device sends measurement gap information corresponding to the one or more measurement objects to the first network device, where the one or more measurement objects are configured by the second network device.

Optionally, the dual connections are established between the terminal device and both the first network device and the second network device, and the method further includes: The terminal device sends second measurement indication information to the second network device, where the first measurement indication information indicates that measurement performed by the terminal device on the one or more measurement objects in the first BWP group does not involve the measurement gap, or indicates the first measurement gap pattern used by the terminal device to measure the one or more measurement objects in the first BWP group.

According to a third aspect, this application provides a scheduling method, including:

A first network device determines whether a measurement gap is involved when a terminal device measures each of one or more measurement objects in a first bandwidth part BWP group.

The first network device performs measurement-gap-based scheduling or non-measurement-gap-based scheduling on the terminal device based on a determining result.

According to the technical solution in this application, the first network device can determine, based on a measurement gap requirement proposed when the terminal device actually measures the measurement object, whether to perform measurement-gap-based scheduling. This can help avoid unnecessary interruption when the terminal device switches a BWP, and help data transmission efficiency.

In some possible implementations, that the first network device performs measurement-gap-based scheduling or non-measurement-gap-based scheduling based on a determining result includes: The first network device performs non-measurement-gap-based scheduling on the terminal device if none of the one or more measurement objects involves the measurement gap.

In this way, the first network device may perform non-MG-based scheduling. This helps avoid unnecessary data interruption between the terminal device and the network device.

In some other possible implementations, that the first network device performs measurement-gap-based scheduling or non-measurement-gap-based scheduling based on a determining result includes: The first network device performs measurement-gap-based scheduling on the terminal device if at least one of the one or more measurement objects involves the measurement gap. In this way, when measurement of the at least one of the one or more measurement objects needs the MG, the terminal device may perform MG-based measurement, to avoid a packet loss caused by data transmission performed when the terminal performs measurement.

Specifically, that the network device performs measurement-gap-based scheduling on the terminal device if at least one of the one or more measurement objects involves the measurement gap includes: If the at least one of the one or more measurement objects involves the measurement gap, the first network device determines, based on measurement gap information corresponding to the one or more measurement objects, a first measurement gap pattern for scheduling the one or more measurement objects. The first network device performs measurement-gap-based scheduling on the terminal device based on the first measurement gap pattern.

In this way, the first measurement gap pattern for scheduling the one or more measurement objects is determined based on the measurement gap information corresponding to the one or more measurement objects, so that an MG requirement proposed when the terminal device measures each of the one or more measurement objects in the first bandwidth part BWP group can be comprehensively considered. The first measurement gap pattern obtained in such a manner can better satisfy an actual measurement requirement, help avoid data interruption caused by an unnecessary measurement gap, and help avoid a packet loss caused by an excessively short measurement gap length.

In some optional implementations, the measurement gap information corresponding to the one or more measurement objects includes a measurement gap length and a measurement gap repetition period of each of the one or more measurement objects, and the first measurement gap pattern includes a first measurement gap length and a first measurement gap period; and if measurement performed by the terminal device on the one or more measurement objects supports switching between at least two measurement gap patterns, that the first network device determines, based on measurement gap information corresponding to the one or more measurement objects, a first measurement gap pattern for scheduling the one or more measurement objects includes: The first network device determines the first measurement gap length based on the measurement gap length corresponding to the one or more measurement objects, and determines the first measurement gap period based on the measurement gap period corresponding to the one or more measurement objects. For example, the first measurement gap length is a largest value in the measurement gap length corresponding to the one or more measurement objects, and the first measurement gap period is a smallest value in the measurement gap period corresponding to the one or more measurement objects.

In this way, it can be ensured that the first measurement gap length and the first measurement gap period that are used by a first terminal for measurement can satisfy a requirement of measuring each of the one or more measurement objects by the terminal device, and the network device does not schedule the terminal device within the first measurement gap length. This helps the terminal device better measure the one or more measurement objects, and avoids the packet loss caused by the excessively short measurement gap length.

In some optional implementations, the measurement gap information corresponding to the one or more measurement objects includes a measurement gap pattern of the one or more measurement objects; and if measurement performed by the terminal device on the one or more measurement objects supports only switching between non-measurement-gap-based measurement and measurement-gap-based measurement performed based on a measurement gap pattern, that the first network device determines, based on measurement gap information corresponding to the one or more measurement objects, a first measurement gap pattern for scheduling the one or more measurement objects includes: The first network device determines, based on the measurement gap information corresponding to the one or more measurement objects, that the first measurement gap pattern is the measurement gap pattern in the measurement gap information corresponding to the one or more measurement objects.

In this way, measurement performed by the terminal device on the measurement object supports only two measurement manners: One is performing non-MG-based measurement, and the other is performing MG-based measurement based on a measurement gap pattern configured by the network device. In other words, in this case, the measurement performed by the terminal device on the measurement object supports only switching between no-gap and gap, but does not support switching between different measurement gap patterns.

In some possible implementations, the method further includes: The first network device sends first indication information to the terminal device, where the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern. In this way, the terminal device can obtain information indicating whether switching between different measurement gap patterns can be performed.

In some possible implementations, the method further includes: The first network device sends second indication information to the terminal device, where the second indication information indicates the measurement gap information corresponding to the one or more measurement objects. In this way, the terminal device and the first network device determine the first measurement pattern based on same measurement gap information corresponding to the one or more measurement objects, and the measurement gap information is aligned between the terminal device and the network device, so that the terminal device and the network device obtain a same first measurement pattern.

In some possible implementations, dual connections are established between the terminal device and both the first network device and a second network device, and the method further includes: The first network device receives measurement gap configuration information sent by the terminal device, where a measurement object in a measurement object group is configured by the second network device, and the measurement gap configuration information corresponding to the measurement object group includes that measurement of the measurement object in the measurement object group does not involve the measurement gap, or includes measurement gap information corresponding to the measurement object in the measurement object group. For example, the first network device may not have information about one or more measurement objects that the second network device needs to measure. As a result, whether the one or more measurement objects configured by the second network device need the measurement gap cannot be determined. In this case, the terminal device may send, to the first network device, the measurement gap information of the measurement object that the second network device needs to measure.

In some possible implementations, the method further includes: The first network device sends measurement indication information to the terminal device based on the determining result, where the measurement indication information indicates the terminal device to measure the one or more measurement objects in the first BWP group without involving the measurement gap, or indicates the first measurement gap pattern, and the first measurement gap information is used by the terminal device to measure the one or more measurement objects in the first BWP group. In such a technical solution, the terminal device and the network device use a same policy to determine whether measurement of the terminal device is based on the MG. In this way, information can be aligned between the terminal device and the network device.

According to a fourth aspect, an implementation of this application provides a scheduling method, including:

A second network device receives measurement indication information sent by a terminal device, where the measurement indication information indicates that measurement performed by the terminal device on none of one or more measurement objects in a first BWP group involves a measurement gap, or indicates a first measurement gap pattern used by the terminal device to measure one or more measurement objects in a first BWP group, and the first BWP group includes an active BWP of one or more serving cells of the terminal device.

The second network device performs non-measurement-gap-based scheduling based on the measurement indication information, or performs measurement-gap-based scheduling based on the first measurement gap pattern.

In this way, information can be aligned between the terminal device and the network device, so that the second network device can schedule the terminal device by using a scheduling policy corresponding to a measurement policy of the terminal device. This helps avoid unnecessary data interruption and improve data transmission efficiency.

In some possible implementations, that the second network device performs non-measurement-gap-based scheduling based on the measurement indication information, or performs measurement-gap-based scheduling based on the first measurement gap pattern includes: The second network device performs non-measurement-gap-based scheduling on the terminal device if the measurement indication information indicates that the measurement performed by the terminal device on none of the one or more measurement objects in the first BWP group involves the measurement gap.

In some possible implementations, that the second network device performs non-measurement-gap-based scheduling based on the measurement indication information, or performs measurement-gap-based scheduling based on the first measurement gap pattern includes: The second network device performs measurement-gap-based scheduling on the terminal device based on the first measurement gap pattern if the measurement indication information indicates the first measurement gap pattern used by the terminal device to measure the one or more measurement objects in the first BWP group.

According to a fifth aspect, an implementation of this application provides a measurement apparatus. The measurement apparatus may be a terminal device, or may be used in a terminal device. The measurement apparatus includes a processing unit and a transceiver unit.

The processing unit is configured to: determine whether a measurement gap is involved when each of one or more measurement objects is measured in a first bandwidth part BWP group, where the first BWP group includes an active BWP of one or more serving cells of the terminal device; and
control the transceiver unit to perform measurement-gap-based measurement or non-measurement-gap-based measurement based on a determining result.

In this way, the terminal device can determine, based on a measurement gap requirement proposed when the terminal device actually measures the measurement object, whether to perform measurement-gap-based measurement. This can help avoid unnecessary interruption when the terminal device switches a BWP, and help data transmission efficiency.

In some implementations, in an aspect of the performing measurement-gap-based measurement or non-measurement-gap-based measurement based on a determining result, the processing unit is specifically configured to:
control, if none of the one or more measurement objects involves the measurement gap, the transceiver unit to perform non-measurement-gap-based measurement.

In some implementations, in the aspect of the controlling, based on a determining result, the transceiver unit to perform measurement-gap-based measurement or non-measurement-gap-based measurement, the processing unit is specifically configured to:
control, if at least one of the one or more measurement objects involves the measurement gap, the transceiver unit to perform measurement-gap-based measurement.

In some implementations, in an aspect of the performing measurement-gap-based measurement if at least one of the one or more measurement objects involves the measurement gap, the processing unit is specifically configured to:
if the at least one of the one or more measurement objects involves the measurement gap, determine, based on measurement gap information corresponding to the one or more measurement objects, a first measurement gap pattern for measuring the one or more measurement objects; and
control, for the terminal device based on the first measurement gap pattern, the transceiver unit to perform measurement-gap-based measurement.

In some implementations, the measurement gap information corresponding to the one or more measurement objects includes a measurement gap length and a measurement gap repetition period of each of the one or more measurement objects, and the first measurement gap pattern includes a first measurement gap length and a first measurement gap period; and if measurement of the one or more measurement objects supports switching between at least two measurement gap patterns, in an aspect of the determining, based on measurement gap information corresponding to the one or more measurement objects, a first measurement gap pattern for measuring the one or more measurement objects, the processing unit is specifically configured to:
determine the first measurement gap length based on the measurement gap length corresponding to the one or more measurement objects, and determine the first measurement gap pattern based on the measurement gap pattern corresponding to the one or more measurement objects.

In some implementations, the first measurement gap length is a largest value in the measurement gap length corresponding to the one or more measurement objects, and the first measurement gap period is a smallest value in the measurement gap period corresponding to the one or more measurement objects.

In some implementations, the measurement gap information corresponding to the one or more measurement objects includes a measurement gap pattern of the one or more measurement objects; and
if measurement of the one or more measurement objects supports only switching between the no-measurement-gap measurement and the measurement-gap-based measurement that is performed based on a measurement gap pattern, in an aspect of the determining, based on measurement gap information corresponding to the one or more measurement objects, a first measurement gap pattern for measuring the one or more measurement objects, the processing unit is specifically configured to:
determine, based on the measurement gap information corresponding to the one or more measurement objects, that the first measurement gap pattern is the measurement gap pattern in the measurement gap information corresponding to the one or more measurement objects.

In some implementations, before the determining, based on measurement gap information corresponding to the one or more measurement objects, a first measurement gap pattern for measuring the one or more measurement objects, the apparatus further includes a receiving unit, configured to receive first indication information sent by a first network device, where
the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

In some implementations, the transceiver unit is configured to receive second indication information sent by the first network device, where the second indication information indicates the measurement gap information corresponding to the one or more measurement objects.

In some implementations, dual connections are established between the terminal device and both the first network device and a second network device, and the transceiver unit is configured to send measurement gap configuration information corresponding to a measurement object group to the first network device, where a measurement object in the measurement object group is configured by the second network device, and the measurement gap configuration information corresponding to the measurement object group includes that measurement of the measurement object in the measurement object group does not involve the measurement gap, or includes measurement gap information corresponding to the measurement object in the measurement object group.

In some implementations, the dual connections are established between the terminal device and both the first network device and the second network device, and the transceiver unit is configured to send measurement indication information to the second network device, where the measurement indication information indicates that measurement performed by the terminal device on none of the one or more measurement objects in the first BWP group involves the measurement gap, or indicates the first measurement gap pattern used by the terminal device to measure the one or more measurement objects in the first BWP group.

According to a sixth aspect, an implementation of this application provides a measurement apparatus. The measurement apparatus may be a terminal device, or may be used in a terminal device. The measurement apparatus includes:
a transceiver unit, configured to receive first measurement indication information sent by a first network device, where the first measurement indication information indicates the terminal device to measure one or more measurement objects in a first BWP group without involving a measurement gap, or indicates a first measurement gap pattern to be used by the terminal device to measure one or more measurement objects in a first BWP group, and the first BWP group includes an active BWP of one or more serving cells of the terminal device; and
a processing unit, configured to control the receiving unit to perform measurement-gap-based measurement or non-measurement-gap-based measurement based on the measurement indication information.

In such a technical solution, the terminal device and the network device use a same policy to determine whether measurement of the terminal device is based on the MG. In this way, information can be aligned between the terminal device and the network device.

In some implementations, in an aspect of the controlling, based on the measurement indication information, the receiving unit to perform measurement-gap-based measurement or non-measurement-gap-based measurement, the processing unit is specifically configured to:
control, if the indication information indicates the terminal device to measure the one or more measurement objects in the first BWP group without involving the measurement gap, the receiving unit to perform non-measurement-gap-based measurement.

In some implementations, in the aspect of the controlling, based on the measurement indication information, the receiving unit to perform measurement-gap-based measurement or non-measurement-gap-based measurement, the processing unit is specifically configured to:
control, if the indication information indicates the first measurement gap pattern to be used by the terminal device to measure the one or more measurement objects in the first BWP group, the receiving unit to perform measurement-gap-based measurement based on the first measurement gap pattern.

In some implementations, dual connections are established between the terminal device and both the first network device and a second network device, and the transceiver unit is further configured to send measurement gap information corresponding to the one or more measurement objects to the first network device, where the one or more measurement objects are configured by the second network device.

In some implementations, the dual connections are established between the terminal device and both the first network device and the second network device, and the transceiver unit is further configured to send second measurement indication information to the second network device, where the first measurement indication information indicates that measurement performed by the terminal device on the one or more measurement objects in the first BWP group does not involve the measurement gap, or indicates the first measurement gap pattern used by the terminal device to measure the one or more measurement objects in the first BWP group.

According to a seventh aspect, an implementation of this application provides a scheduling apparatus. The scheduling apparatus may be a first network device, or may be used in a first network device. The scheduling apparatus includes a processing unit and a transceiver unit. The processing unit is configured to:
determine whether a measurement gap is involved when a terminal device measures each of one or more measurement objects in a first bandwidth part BWP group; and
control, based on a determining result, the transceiver unit to perform measurement-gap-based scheduling or non-measurement-gap-based scheduling on the terminal device.

According to the technical solution in this application, the first network device can determine, based on a measurement gap requirement proposed when the terminal device actually measures the measurement object, whether to perform measurement-gap-based scheduling. This can help avoid unnecessary interruption when the terminal device switches a BWP, and help data transmission efficiency.

In some implementations, in an aspect of the controlling, based on a determining result, the transceiver unit to perform measurement-gap-based scheduling or non-measurement-gap-based scheduling, the processing unit is specifically configured to:
control, if none of the one or more measurement objects involves the measurement gap, the transceiver unit to perform non-measurement-gap-based scheduling on the terminal device.

In some implementations, in the aspect of the controlling, by a first network device based on a determining result, the transceiver unit to perform measurement-gap-based scheduling or non-measurement-gap-based scheduling, the processing unit is specifically configured to:
control, if at least one of the one or more measurement objects involves the measurement gap, the transceiver unit to perform measurement-gap-based scheduling on the terminal device.

In some implementations, in an aspect of the controlling, if at least one of the one or more measurement objects involves the measurement gap, the transceiver unit to perform measurement-gap-based scheduling on the terminal device, the processing unit is specifically configured to:
if the at least one of the one or more measurement objects involves the measurement gap, determine, based on measurement gap information corresponding to the one or more measurement objects, a first measurement gap pattern for measuring the one or more measurement objects; and
control, based on the first measurement gap pattern, the transceiver unit to perform measurement-gap-based scheduling on the terminal device.

In some implementations, the measurement gap information corresponding to the one or more measurement objects includes a measurement gap length and a measurement gap repetition period of each of the one or more measurement objects, and the first measurement gap pattern includes a first measurement gap length and a first measurement gap period; and
if measurement performed by the terminal device on the one or more measurement objects supports switching between at least two measurement gap patterns, in an aspect of the determining, based on measurement gap information corresponding to the one or more measurement objects, a first measurement gap pattern for scheduling the one or more measurement objects, the processing unit is specifically configured to:
determine the first measurement gap length based on the measurement gap length corresponding to the one or more measurement objects, and determine the first measurement gap pattern based on the measurement gap pattern corresponding to the one or more measurement objects.

In some implementations, the first measurement gap length is a largest value in the measurement gap length corresponding to the one or more measurement objects, and the first measurement gap period is a smallest value in the measurement gap period corresponding to the one or more measurement objects.

In some implementations, the measurement gap information corresponding to the one or more measurement objects includes a measurement gap pattern of the one or more measurement objects; and
if measurement performed by the terminal device on the one or more measurement objects supports only switching between non-measurement-gap-based measurement and measurement-gap-based measurement performed based on a measurement gap pattern, in an aspect of the determining, based on measurement gap information corresponding to the one or more measurement objects, a first measurement gap pattern for scheduling the one or more measurement objects, the processing unit is specifically configured to:
determine, based on the measurement gap information corresponding to the one or more measurement objects, that the first measurement gap pattern is the measurement gap pattern in the measurement gap information corresponding to the one or more measurement objects.

In some implementations, the transceiver unit is configured to send second indication information to the terminal device, where
the second indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

In some implementations, the transceiver unit is configured to send second indication information to the terminal device, where the second indication information indicates the measurement gap information corresponding to the one or more measurement objects.

In some implementations, dual connections are established between the terminal device and both the first network device and a second network device, and the transceiver unit is configured to receive measurement gap configuration information sent by the terminal device, where
a measurement object in a measurement object group is configured by the second network device, and the measurement gap configuration information corresponding to the measurement object group includes that measurement of the measurement object in the measurement object group does not involve the measurement gap, or includes measurement gap information corresponding to the measurement object in the measurement object group.

In some implementations, the transceiver unit is configured to send measurement indication information to the terminal device based on the determining result, where the measurement indication information indicates the terminal device to measure the one or more measurement objects in the first BWP group without involving the measurement gap, or indicates the first measurement gap pattern, and the first measurement gap information is used by the terminal device to measure the one or more measurement objects in the first BWP group.

According to an eighth aspect, an implementation of this application provides a scheduling apparatus. The scheduling apparatus may be a second network device, or may be used in a second network device. The scheduling apparatus includes:
a transceiver unit, configured to receive measurement indication information sent by a terminal device, where the measurement indication information indicates that measurement performed by the terminal device on none of one or more measurement objects in a first BWP group involves a measurement gap, or indicates a first measurement gap pattern used by the terminal device to measure one or more measurement objects in a first BWP group, and the first BWP group includes an active BWP of one or more serving cells of the terminal device; and
a processing unit, configured to control, based on the measurement indication information, the transceiver unit to perform non-measurement-gap-based scheduling, or control, based on the first measurement gap pattern, the transceiver unit to perform measurement-gap-based scheduling.

In this way, information can be aligned between the terminal device and the network device, so that the second network device can schedule the terminal device by using a scheduling policy corresponding to a measurement policy of the terminal device. This helps avoid unnecessary data interruption and improve data transmission efficiency.

In some implementations, in an aspect of the performing non-measurement-gap-based scheduling based on the measurement indication information, or controlling, based on the first measurement gap pattern, the transceiver unit to perform measurement-gap-based scheduling, the processing unit is specifically configured to:
control, if the measurement indication information indicates that the measurement performed by the terminal device on none of the one or more measurement objects in the first BWP group involves the measurement gap, the transceiver unit to perform non-measurement-gap-based scheduling on the terminal device.

In some implementations, in the aspect of the controlling, based on the measurement indication information, the transceiver unit to perform non-measurement-gap-based scheduling, or controlling, based on the first measurement gap pattern, the transceiver unit to perform measurement-gap-based scheduling, the processing unit is specifically configured to:
control, if the measurement indication information indicates the first measurement gap pattern used by the terminal device to measure the one or more measurement objects in the first BWP group, the transceiver unit to perform measurement-gap-based scheduling on the terminal device based on the first measurement gap pattern.

It should be understood that, related supplementary descriptions and beneficial effects in the measurement methods in the implementations of this application are also applied to the measurement apparatuses in the implementations of this application, and related supplementary descriptions and beneficial effects in the scheduling methods in the implementations of this application are also applied to the scheduling apparatuses in the implementations of this application. To avoid redundancy, details are not described herein again.

According to a ninth aspect, this application provides a communication device. The communication device includes a processor. The processor is coupled to a memory. When the processor executes a computer program or instructions in the memory, the method in any implementation of the first aspect is performed.

Optionally, the apparatus further includes the memory.

Optionally, the apparatus further includes a communication interface. The processor is coupled to the communication interface.

Optionally, there are one or more processors and one or more memories.

Optionally, the memory may be integrated with the processor, or the memory and the processor may be separately disposed.

Optionally, a transceiver may include a transmitter and a receiver.

In an implementation, the communication device is a first terminal device, an access network device, or a first network device. When the communication device is the first terminal device, the access network device, or the first network device, the communication interface may be a transceiver or an input/output interface. Optionally, the transceiver may be a transceiver circuit. Optionally, the input/output interface may be an input/output circuit.

In another implementation, the communication device is a chip or a chip system. When the apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a tenth aspect, this application provides a communication system. The communication system includes the scheduling apparatus in the seventh aspect and the terminal device in the fifth aspect or the sixth aspect. Optionally, the communication system may further include the scheduling apparatus in the eighth aspect.

According to an eleventh aspect, this application provides a computer program product. The computer program product includes a computer program (which may also be referred to as code or instructions). When the computer program is run, a computer is enabled to perform the method in any possible implementation of the first aspect or the second aspect.

According to a twelfth aspect, this application provides a computer-readable storage medium. The computer-readable medium stores a computer program (which may also be referred to as code or instructions). When the computer program is run on a computer, the computer is enabled to perform the method in any possible implementation of the first aspect or the second aspect.

According to a thirteenth aspect, this application further provides a circuit, including a processor and an interface, and configured to execute a computer program or instructions stored in a memory, to perform the method in any possible implementation of the first aspect or the second aspect.

### BRIEF DESCRIPTION OF DRAWINGS

To describe technical solutions in embodiments of this application or in the prior art more clearly, the following briefly describes accompanying drawings used in embodiments.
FIG. 1 is a schematic diagram of a network architecture of a communication system;
FIG. 2a is a schematic diagram of a structure of a network device according to an embodiment of this application;
FIG. 2b is a schematic diagram of a structure of a terminal device according to an embodiment of this application;
FIG. 3a is a schematic diagram of a scenario of a communication system according to an embodiment of this application;
FIG. 3b is a schematic diagram of a scenario of a communication system according to an embodiment of this application;
FIG. 3c is a schematic diagram of a scenario of a communication system according to an embodiment of this application;
FIG. 3d is a schematic diagram of a scenario of a communication system according to an embodiment of this application;
FIG. 4a is a schematic flowchart of a measurement method according to an embodiment of this application;
FIG. 4b is a schematic flowchart of another measurement method according to an embodiment of this application;
FIG. 4c is a schematic flowchart of another measurement method according to an embodiment of this application;
FIG. 4d is a schematic flowchart of another measurement method according to an embodiment of this application;
FIG. 5a is a schematic flowchart of a scheduling method according to an embodiment of this application;
FIG. 5b is a schematic flowchart of another scheduling method according to an embodiment of this application;
FIG. 5c is a schematic flowchart of another scheduling method according to an embodiment of this application;
FIG. 5d is a schematic flowchart of another scheduling method according to an embodiment of this application;
FIG. 6 is a schematic flowchart of another measurement method according to an embodiment of this application;
FIG. 7 is a schematic flowchart of another measurement method according to an embodiment of this application;
FIG. 8a is a schematic flowchart of another measurement method according to an embodiment of this application;
FIG. 8b is a schematic flowchart of another measurement method according to an embodiment of this application;
FIG. 9 is a schematic flowchart of another measurement method according to an embodiment of this application;
FIG. 10 is a schematic diagram of a scenario of a measurement method according to an embodiment of this application;
FIG. 11 is a schematic diagram of a scenario of another measurement method according to an embodiment of this application;
FIG. 12a is a schematic diagram of a scenario of another measurement method according to an embodiment of this application;
FIG. 12b is a schematic diagram of a scenario of another measurement method according to an embodiment of this application;
FIG. 13 is a schematic diagram of a structure of a measurement apparatus according to an embodiment of this application;
FIG. 14 is a schematic diagram of a structure of another measurement apparatus according to an embodiment of this application;
FIG. 15 is a schematic diagram of a structure of a scheduling apparatus according to an embodiment of this application; and
FIG. 16 is a schematic diagram of a structure of another scheduling apparatus according to an embodiment of this application.

### DESCRIPTION OF EMBODIMENTS

The following describes embodiments of the present invention with reference to the accompanying drawings in embodiments of the present invention.

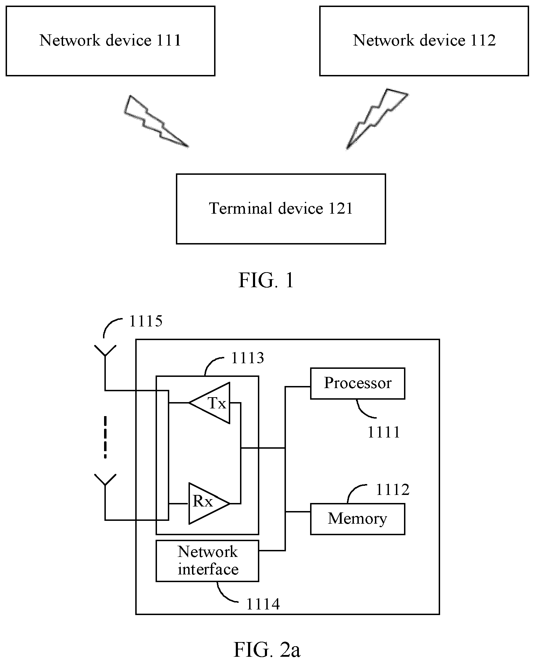

The technical solutions in embodiments of this application may be applicable to a communication system shown in FIG. 1. The communication system includes a network device 111. Optionally, the communication system may further include a second network device 112. Optionally, the network device 111 may be connected to the network device 112. The network device 111 and the network device 112 may be, for example, access network devices. Optionally, the communication system may further include a core network device. The core network device may be connected to the network device 111 and the network device 112.

In the communication system shown in FIG. 1, a terminal device 121 may communicate with at least one of the network device 111 and the network device 112. For example, the terminal device 121 may communicate with the network device 111. Alternatively, the terminal device 121 may communicate with the network device 112. Alternatively, the terminal device 121 may communicate with both the network device 111 and the network device 112. It should be noted that the network devices included in the communication system in FIG. 1 are merely an example. In embodiments of this application, types and a quantity of network elements included in the communication system and a connection relationship between the network elements are not limited thereto.

The communication system may be a communication system that supports a fourth generation (fourth generation, 4G) access technology, for example, a long term evolution (long term evolution, LTE) access technology; the communication system may be a communication system that supports a fifth generation (fifth generation, 5G) access technology, for example, a new radio (new radio, NR) access technology; the communication system may be a communication system that supports a third generation (third generation, 3G) access technology, for example, a universal mobile telecommunications system (universal mobile telecommunications system, UMTS) access technology; the communication system may be a communication system of a second generation (second generation, 2G) access technology, for example, a global system for mobile communications (global system for mobile communications, GSM) access technology; or the communication system may be a communication system that supports a plurality of wireless technologies, for example, a communication system that supports an LTE technology and an NR technology. In addition, the communication system is applicable to a future-oriented communication technology.

The network device 111 and the network device 112 in FIG. 1 each may be a device configured to support a terminal in accessing a communication system on an access network side, for example, may be a base transceiver station (base transceiver station, BTS) and a base station controller (base station controller, BSC) in a 2G access technology communication system, a NodeB (NodeB) and a radio network controller (radio network controller, RNC) in a 3G access technology communication system, an evolved NodeB (evolved NodeB, eNB) in a 4G access technology communication system, and a next generation NodeB (next generation NodeB, gNB), a transmission reception point (transmission reception point, TRP), a relay node (relay node), and an access point (access point, AP) in a 5G access technology communication system.

The terminal device 121 in FIG. 1 may be a device that provides voice or data connectivity for a user, for example, may also be referred to as user equipment (user equipment, UE), a mobile station (mobile station), a subscriber unit (subscriber unit), a station (station), or terminal equipment (terminal equipment, TE). The terminal may be a cellular phone (cellular phone), a personal digital assistant (personal digital assistant, PDA), a wireless modem (modem), a handheld (handheld) device, a laptop computer (laptop computer), a cordless phone (cordless phone), a wireless local loop (wireless local loop, WLL) station, a tablet computer (pad), or the like. With development of wireless communication technologies, a device that may access a communication system, a device that may communicate with a network side of the communication system, or a device that communicates with another object by using the communication system may be the terminal in embodiments of this application, for example, a terminal and a vehicle in intelligent transportation, a household device in smart home, an electricity meter reading instrument in smart grid, a voltage monitoring instrument, an environment monitoring instrument, a video surveillance instrument in an intelligent security network, or a cashing machine. In embodiments of this application, the terminal may communicate with a network device, for example, the network device 111 or the network device 112. A plurality of terminals may also communicate with each other. The terminal may be statically fixed, or may be mobile.

FIG. 2a is a schematic diagram of a structure of a network device. For a structure of a network device (for example, a first network device or a second network device) in embodiments of this application, refer to the structure shown in FIG. 2a.

The network device includes at least one processor 1111, at least one transceiver 1113, at least one network interface 1114, and one or more antennas 1115. Optionally, the network device further includes at least one memory 1112. The processor 1111, the memory 1112, the transceiver 1113, and the network interface 1114 are connected, for example, through a bus. The antenna 1115 is connected to the transceiver 1113. The network interface 1114 is configured to enable the network device to connect to another communication device through a communication link. For example, the network device is connected to a core network element 101 through an S 1 interface. In embodiments of this application, the connection may include various types of interfaces, transmission lines, buses, or the like. This is not limited in embodiments.

A processor, for example, the processor 1111, in embodiments of this application may include at least one of the following types: a general-purpose central processing unit (central processing unit, CPU), a digital signal processor (digital signal processor, DSP), a microprocessor, an application-specific integrated circuit (application-specific integrated circuit, ASIC), a microcontroller unit (microcontroller unit, MCU), a field programmable gate array (field programmable gate array, FPGA), or an integrated circuit configured to implement a logical operation. For example, the processor 1111 may be a single-core (single-CPU) processor or a multi-core (multi-CPU) processor. The at least one processor 1111 may be integrated into one chip or located on a plurality of different chips.

A memory, for example, the memory 1112, in embodiments of this application may include at least one of the following types: a read-only memory (read-only memory, ROM), another type of static storage device that can store static information and instructions, a random access memory (random access memory, RAM), another type of dynamic storage device that can store information and instructions, or an electrically erasable programmable read-only memory (electrically erasable programmable read-only memory, EEPROM). In some scenarios, the memory may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

The memory 1112 may exist independently, and is connected to the processor 1111. Optionally, the memory 1112 may alternatively be integrated with the processor 1111, for example, integrated into one chip. The memory 1112 can store program code for executing the technical solutions in embodiments of this application, and the processor 1111 controls the execution. Various types of executed computer program code may also be considered as drivers of the processor 1111. For example, the processor 1111 is configured to execute the computer program code stored in the memory 1112, to implement the technical solutions in embodiments of this application.

The transceiver 1113 may be configured to support receiving or sending of a radio frequency signal between the network device and a terminal, and the transceiver 1113 may be connected to the antenna 1115. The transceiver 1113 includes a transmitter Tx and a receiver Rx. Specifically, the one or more antennas 1115 may receive a radio frequency signal. The receiver Rx in the transceiver 1113 is configured to: receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation processing and decoding processing. In addition, the transmitter Tx in transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

Optionally, the network device 111 may include a baseband unit (baseband unit, BBU), a radio remote unit (radio remote unit, RRU), and an antenna. The BBU is connected to the RRU, and the RRU is connected to the antenna.

Optionally, the network device 112 may include a baseband unit (baseband unit, BBU), a radio remote unit (radio remote unit, RRU), and an antenna. The BBU is connected to the RRU, and the RRU is connected to the antenna.

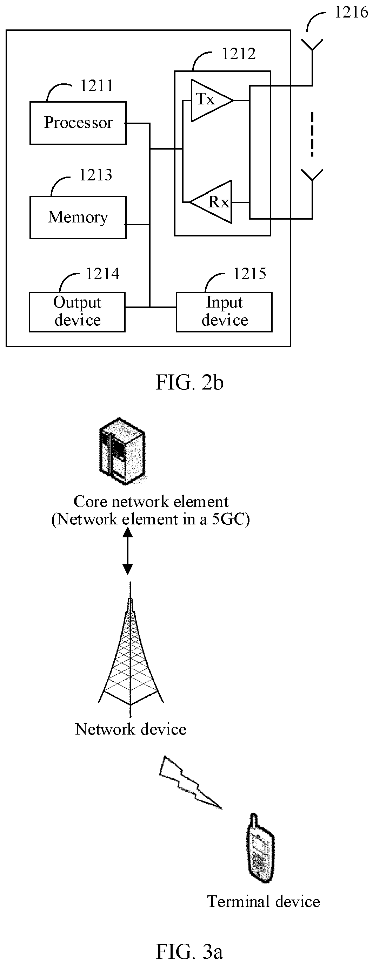

FIG. 2b is a schematic diagram of a structure of a terminal device according to an embodiment of this application. For a structure of a terminal device, refer to the structure shown in FIG. 2b.

The terminal device 121 includes at least one processor 1211 and at least one transceiver 1212. Optionally, the terminal device 121 further includes at least one memory 1213. The processor 1211, the memory 1213, and the transceiver 1212 are connected to each other. Optionally, the terminal device 121 may further include an output device 1214, an input device 1215, and one or more antennas 1216. The antenna 1216 is connected to the transceiver 1212, and the output device 1214 and the input device 1215 are connected to the processor 1211.

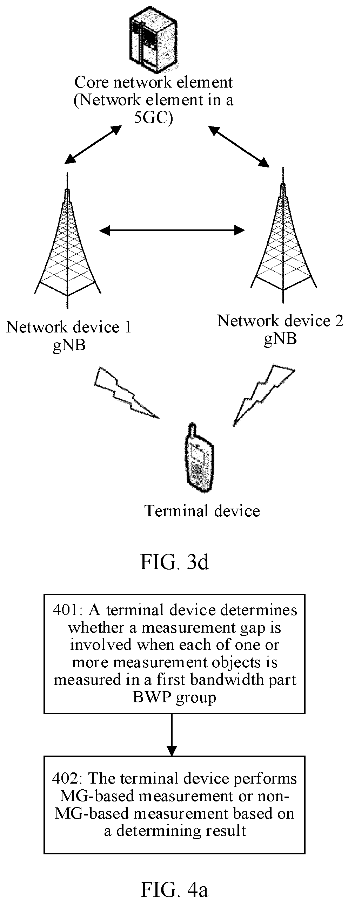

For the transceiver 1212, the memory 1213, and the antenna 1216, refer to related descriptions in FIG. 4a to implement similar functions.

The processor 1211 may be a baseband processor, or may be a CPU. The baseband processor and the CPU may be integrated or separated.

The processor 1211 may be configured to implement various functions for the terminal device 121, for example, configured to process a communication protocol and communication data, or configured to control the entire terminal device 121, execute a software program, and process data of the software program; or configured to assist in completing a computing processing task, for example, performing graphics and image processing or audio processing. Alternatively, the processor 1211 is configured to implement one or more of the foregoing functions.

The output device 1214 communicates with the processor 1211, and may display information in a plurality of manners. For example, the output device 1214 may be a liquid crystal display (liquid crystal display, LCD), a light emitting diode (light emitting diode, LED) display device, a cathode ray tube (cathode ray tube, CRT) display device, or a projector (projector). The input device 1215 communicates with the processor 1211, and may receive an input from a user in a plurality of manners. For example, the input device 1215 may be a mouse, a keyboard, a touchscreen device, or a sensor device.

In the communication system shown in FIG. 1, based on a manner in which a terminal device accesses an access network, the following scenarios may be included:
a. New radio stand-alone (new radio stand-alone, NR SA) scenario.

In a schematic diagram of a network architecture of a communication system shown in FIG. 3a, a terminal device is connected to one network device in the communication system. The network device is a new radio NodeB (new radio NodeB, gNB).

b. Evolved universal terrestrial radio access (evolved universal terrestrial radio access, E-UTRA)-new radio (new radio, NR) dual connectivity (E-UTRA-NR dual connectivity, EN-DC) scenario.

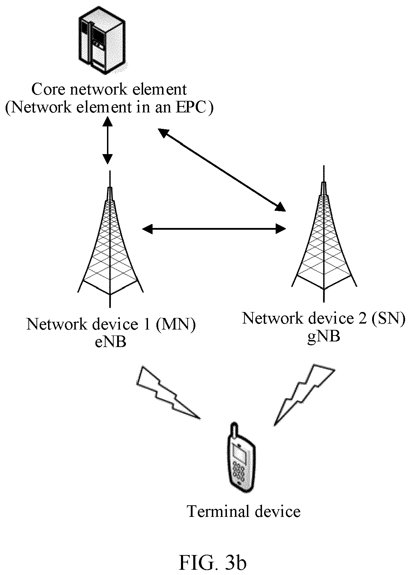

In a schematic diagram of a network architecture of a communication system shown in FIG. 3b, a core network element in the communication system is a network element in an evolved packet core (evolved packet core, EPC), a network device 1 is an evolved universal terrestrial radio access network NodeB (evolved universal terrestrial radio access network NodeB, eNB), and a network device 2 is a new radio NodeB (new radio NodeB, gNB).

The network device 1 is a master network device, and the network device 2 is a secondary network device.

A terminal device communicates with both the network device 1 and the network device 2.

c. NR-E-UTRA dual connectivity (NR-E-UTRA dual connectivity, NE-DC) scenario.

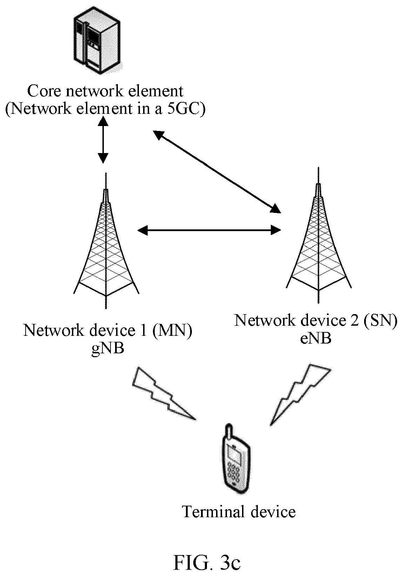

In a schematic diagram of a network architecture of a communication system shown in FIG. 3c, a core network element in the communication system is a network element in a 5GC, a network device 1 is a gNB, and a network device 2 is an eNB.

The network device 1 is a master network device, and the network device 2 is a secondary network device.

A terminal device communicates with both the network device 1 and the network device 2.

d. NR dual connectivity (NR-DC) scenario.

In a schematic diagram of a network architecture of a communication system shown in FIG. 3d, a core network element in the communication system is a network element in a 5GC, and a network device 1 and a network device 2 are gNBs. Either of the network device 1 and the network device 2 is a master network device (master node, MN), and the other is a secondary network device (secondary node, SN).

The foregoing three scenarios b, c, and d may be referred to as multi-RAT dual connectivity (multi-rat dual connectivity, MR-DC) scenarios.

In the three scenarios b, c, and d, control plane signaling and user plane signaling may be transmitted between the master network device and the core network element, and user plane signaling may be transmitted between the secondary network device and the core network element. Control plane signaling between the core network element and the secondary network device may be transmitted via a master access network device. For example, the core network element sends control plane signaling to the master network device, and the master network device sends the control plane signaling to the secondary network device through an interface (which may be an interface between the master network device and the secondary network device). Alternatively, control plane signaling of the secondary network device may be sent to the master network device through an interface, and then the master network device sends the control plane signaling to the core network element.

User plane signaling or control plane signaling may be transmitted between the master network device and the terminal device through an air interface. User plane signaling may be transmitted between the secondary network device and the terminal device through an air interface. Control plane signaling may be transmitted between the secondary network device and the terminal device via the master network device. For example, the secondary network device sends control plane signaling to the master network device, and the master network device sends the control plane signaling to the terminal device through the air interface. Alternatively, the master network device receives control plane signaling from the terminal device, and then the master network device sends the control plane signaling to the secondary network device through the interface. Alternatively, control plane signaling may be transmitted between the secondary network device and the terminal device through the air interface.

For example, before an RRC connection is established between the terminal device and the secondary network device, the control plane signaling may be transmitted between the terminal device and the master network device through the air interface. After the RRC connection is established between the terminal device and the secondary network device, the control plane signaling may be transmitted between the terminal device and the secondary network device via the master network device, or the control plane signaling may be transmitted between the secondary network device and the terminal device by using a signaling radio bearer (signaling radio bearer, SRB), for example, an SRB 3.

To avoid unnecessary data interruption that occurs when a terminal device switches a BWP for measurement, it is proposed in a related technology that a network device configures an MG for each BWP in advance. When the terminal device switches to an active BWP that does not need MG-based measurement, MG-based measurement does not need to be performed. However, a specific solution of how the terminal device and the network device determine whether the MG configured by the network device takes effect is not provided. In other words, a solution of how the terminal device and the network device determine whether a BWP obtained through switching is an active BWP that needs the MG-based measurement is not provided.

It is proposed in another related technology that a network device determines a mapping relationship between the BWP and a measurement gap pattern (MG pattern), and configures the mapping relationship for the terminal device. After switching the BWP, the terminal device obtains, based on the mapping relationship, an MG pattern corresponding to a BWP obtained through switching. In such a solution, if the terminal device has a plurality of serving cells, when BWP switching occurs in the plurality of serving cells simultaneously, the terminal device cannot determine a BWP corresponding to an MG pattern that measurement can be performed based on, and the network device cannot determine a BWP corresponding to an MG pattern that the terminal is scheduled based on either.

In a measurement solution in embodiments of this application, the terminal device determines, depending on whether a measurement gap is involved when each of one or more measurement objects is measured in a first bandwidth part BWP group, whether to perform MG-based measurement, and a network device also determines, depending on whether the measurement gap is involved when the terminal device measures each of the one or more measurement objects in the first bandwidth part BWP group, whether to perform MG-based scheduling. In this way, the terminal device and the network device can determine, based on an MG requirement proposed during actual measurement, whether to perform MG-based measurement and scheduling. This can help perform correct measurement after the terminal device switches a BWP, and avoid unnecessary interruption.

The following describes the technical solutions in this application in detail with reference to measurement methods and scheduling methods in embodiments of this application.

In a schematic flowchart shown in FIG. 4a, a measurement method in an embodiment of this application may include the following steps.

401: A terminal device determines whether a measurement gap is involved when each of one or more measurement objects is measured in a first bandwidth part BWP group.

The first BWP group includes an active (active) BWP of one or more serving cells of the terminal device.

There may be one or more serving cells of the terminal device. The active BWP of each of the or more serving cells of the terminal device belongs to a first BWP.

For example, the serving cells of the terminal device include a serving cell 1 and a serving cell 2. If an active BWP of the serving cell 1 is a BWP 1, and an active BWP of the serving cell 2 is a BWP 2, the first BWP group includes the BWP 1 and the BWP 2.

That a terminal device determines whether a measurement gap is involved (involved) when each of one or more measurement objects is measured in a first bandwidth part BWP group may alternatively be understood as that the terminal device determines whether the measurement interval is involved or needed (needed) when the terminal device works in the first bandwidth part BWP group and measures each of the one or more measurement objects.

For example, for an MO that works on a same frequency as the terminal device, if an SSB corresponding to the MO is in the active BWP of the serving cell of the terminal device, when the terminal device measures the MO, the MG is not involved, or in other words, the MG is not needed.

For an MO that works on a different frequency from the terminal device, if an SSB corresponding to the MO is in the active BWP of the serving cell of the terminal device, and the terminal device supports an inter-frequency and no-MG measurement capability, the terminal device may determine that the MG is not needed when the MO is measured, or in other words, the terminal device may determine that the MG is not involved when the MO is measured.

For an MO, if the terminal device indicates, through needForGapsInfoNR-r16, that NeedForGap for bandwidth or a serving cell of the MO is "no-gap", measurement of the MO does not involve or need the MG.

In other cases, MO measurement needs the MG.

402: The terminal device performs MG-based measurement or non-MG-based measurement based on a determining result.

The MG-based measurement may be understood as that measurement of the terminal device needs the MG or involves the MG. Within measurement gap duration, the one or more MOs are measured, and data transmission between the terminal device and the serving cell is interrupted. The MG-based measurement may also be referred to as gap (gap)-based measurement.

The non-MG-based measurement may be understood as that measurement of the terminal device does not need the MG or does not involve the MG. When the terminal device measures the one or more MOs, data transmission between the terminal device and the serving cell is not interrupted. The non-MG-based measurement may also be referred to as no-gap (no-gap) measurement.

When switching a BWP to each BWP in the first BWP group, the terminal device may perform MG-based measurement or non-MG-based measurement.

For example, the serving cells of the terminal device include the serving cell 1 and the serving cell 2. An active BWP of the serving cell 1 is a BWP 3, and an active BWP of the serving cell 2 is a BWP 4. After the terminal device performs BWP switching, the active BWP of the serving cell 1 is switched to the BWP 1, and the active BWP of the serving cell 2 is switched to the BWP 2. Therefore, after the switching, the terminal device may perform MG-based measurement or non-MG-based measurement based on the determining result in step 401.

Optionally, based on the determining result in step 401, the terminal device may further perform MG-based data transmission, that is, may not perform data sending or receiving within the MGL time configured by the network device; or perform non-MG-based data transmission, that is, may perform data sending or receiving within the MGL time configured by the network device.

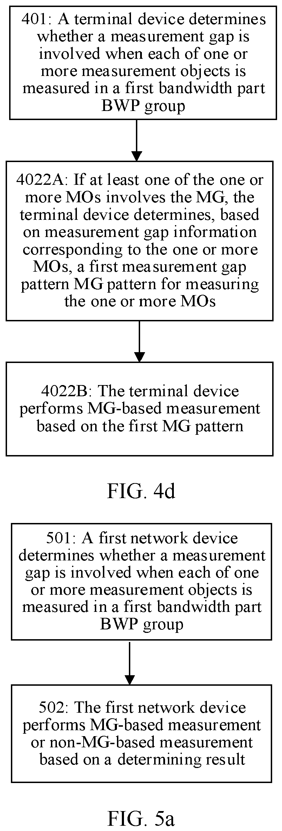

In a schematic flowchart shown in FIG. 5a, a scheduling method in an embodiment of this application may include the following steps.

501: A first network device determines whether a measurement gap is involved when a terminal device measures each of one or more measurement objects in a first bandwidth part BWP group.

The first network device may be any network device in any communication system in FIG. 3a to FIG. 3d.

In other words, the first network device may be an eNB, or may be a gNB. In a dual connectivity scenario, the first network device may be a master network device, or may be a secondary network device.

502: The first network device performs measurement-gap-based scheduling or non-measurement-gap-based scheduling on the terminal device based on a determining result.

It may be understood that a specific policy for the first network device to determine whether the measurement gap is involved when the terminal device measures each of the one or more measurement objects in the first bandwidth part BWP group in step 501 is the same as a specific policy for the terminal device to determine whether the measurement gap is involved when each of the one or more measurement objects is measured in the first bandwidth part BWP group in step 401.

A specific policy for the first network device to determine, based on the determining result in step 501, whether to perform measurement-gap-based scheduling or non-MG-based scheduling on the terminal device in step 502 is the same as a specific policy for the terminal device to determine, based on the determining result in step 401, whether to perform measurement-gap-based measurement or non-measurement-gap-based measurement in step 402.

It should be understood that, in this application, the embodiment of the measurement method and the embodiment of the scheduling method may be combined for implementation, the embodiment of the measurement method may be separately implemented, or the embodiment of the scheduling method may be separately implemented.

The terminal device and/or the network device can determine, based on an MG requirement proposed when the terminal device actually measures the MO, whether to perform MG-based scheduling. This can help avoid unnecessary interruption when the terminal device switches a BWP, and help data transmission efficiency.

A solution in which the embodiment of the measurement method and the embodiment of the scheduling method are combined for implementation may be applied to any one of the foregoing scenarios a, b, c, and d. In such an embodiment, the terminal device and the network device use a same policy to determine whether measurement of the terminal device is based on the MG. In this way, information can be aligned between the terminal device and the network device. For example, if a determining result of the terminal device is performing MG-based measurement in step 402, a determining result of the first network device is also performing MG-based scheduling on the terminal device in step 502. If a determining result of the terminal device is performing non-MG-based measurement in step 402, a determining result of the first network device is also performing non-MG-based scheduling on the terminal device in step 502.

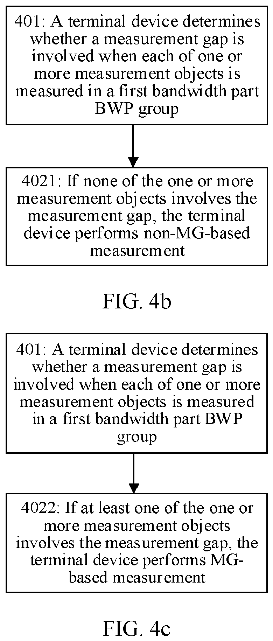

In a schematic flowchart shown in FIG. 4b, step 402 may include the following step.

4021: If the one or more measurement objects do not involve the measurement gap, the terminal device performs non-MG-based measurement.

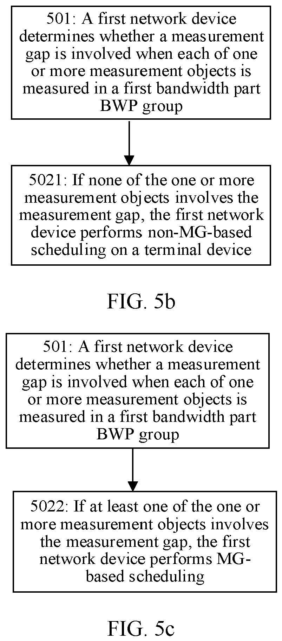

Correspondingly, in a schematic flowchart shown in FIG. 5b, step 502 may include the following step.

5021: If the one or more measurement objects do not involve the measurement gap, the first network device performs non-MG-based scheduling on the terminal device.

It may be understood that, if the MG is not needed or is not involved for each measurement object when the terminal device measures the one or more MOs in the first BWP, it may be determined that measurement performed by the terminal device on the one or more MOs does not need the MG, or in other words, does not involve the MG. When the measurement performed by the terminal device on the one or more MOs does not need the MG, or in other words, does not involve the MG, the terminal device and the first network device may determine that the MG does not take effect.

Correspondingly, if the MG is not needed or is not involved for each measurement object when the terminal device measures the one or more MOs in the first BWP, the network device may also determine that the measurement performed by the terminal device on the one or more MOs does not need the MG, or in other words, does not involve the MG, thereby determining that the network device performs non-MG-based scheduling when the terminal device measures the one or more MOs in the first BWP.

In this way, the terminal device may perform non-MG-based measurement, and the network device performs non-MG-based scheduling. This helps avoid unnecessary data interruption between the terminal device and the network device.

In a schematic flowchart shown in FIG. 4c, step 402 may include the following step.

4022: If at least one of the one or more measurement objects involves the measurement gap, the terminal device performs MG-based measurement.

Correspondingly, in a schematic flowchart shown in FIG. 5c, step 502 may include the following step.

5022: If at least one of the one or more measurement objects involves the measurement gap, the first network device performs MG-based scheduling.

It may be understood that, when the terminal device measures the one or more MOs in the first BWP, if one of the one or more MOs involves the MG, it may be determined that measurement performed by the terminal device on the one or more MOs needs the MG, or in other words, involves the MG, so that it is determined that the terminal device performs MG-based measurement when measuring the one or more MOs in the first BWP. When the measurement performed by the terminal device on the one or more MOs needs the MG, or in other words, involves the MG, the terminal device and the first network device may determine that the MG takes effect.

Correspondingly, when the terminal device measures the one or more MOs in the first BWP, if one of the one or more MOs involves the MG, the network device may also determine that the measurement performed by the terminal device on the one or more MOs needs the MG, or in other words, involves the MG, thereby determining that the network device performs MG-based scheduling when the terminal device measures the one or more MOs in the first BWP.

In this way, when measurement of the at least one of the one or more MOs needs the MG, the terminal device may perform MG-based measurement, and the network device performs MG-based scheduling, to avoid a packet loss caused by data transmission between the network device and the terminal device within an MGL, and reduce a packet loss rate between the network device and the terminal device.

Further, in a schematic flowchart shown in FIG. 4d, step 4022 may be specifically implemented by using the following steps 4022A and 4022B, or in other words, step 4022 may include the following steps 4022A and 4022B.

4022A: If at least one of the one or more MOs involves the MG, the terminal device determines, based on measurement gap information corresponding to the one or more MOs, a first measurement gap pattern MG pattern for measuring the one or more MOs.

4022B: The terminal device performs MG-based measurement based on the first MG pattern.

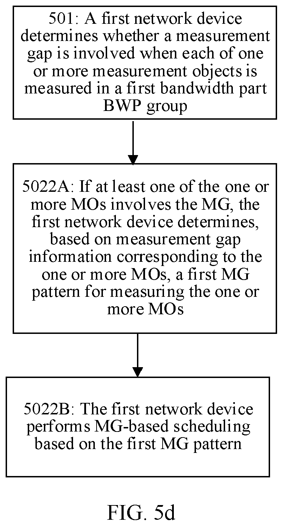

Correspondingly, in a schematic flowchart shown in FIG. 5d, step 5022 may be specifically implemented by using the following steps 5022A and 5022B, or in other words, step 5022 may include the following steps 5022A and 5022B.

5022A: If at least one of the one or more MOs involves the MG, the first network device determines, based on measurement gap information corresponding to the one or more MOs, a first MG pattern for measuring the one or more MOs.

5022B: The first network device performs MG-based scheduling based on the first MG pattern.

The first MG pattern may include an MGL and a measurement gap repetition period (measurement gap repetition period, MGRP) that are for measuring the one or more MOs.

For example, the measurement gap information corresponding to the one or more MOs may include a preferred (preferred) MG pattern of each of the one or more MOs. The preferred MG pattern of each MO includes the MGL and the MGRP that correspond to the MO.

For another example, the measurement gap information corresponding to the one or more MOs may include an MG pattern configured by the network device for the one or more MOs.

In this way, the first MG pattern for measuring the one or more MOs is determined based on the measurement gap information corresponding to the one or more MOs, so that an MG requirement proposed when the terminal device measures each of the one or more measurement objects in the first bandwidth part BWP group can be comprehensively considered. The first MG pattern obtained in such a manner can better satisfy an actual measurement requirement, help avoid data interruption caused by an unnecessary measurement gap, and help avoid a packet loss caused by an excessively short MGL.

In the solutions corresponding to FIG. 4a to FIG. 5d, the first network device and the terminal device separately determine, by using a rule (considering an MG requirement of each MO proposed after the BWP switching), the first MG pattern used during BWP switching, so that understanding of a network and the terminal on an applicable MG pattern can be unified without adding additional signaling.

In a possible implementation, measurement of the one or more measurement objects supports switching between at least two measurement gap patterns (MG patterns), and the measurement gap information corresponding to the one or more MOs includes the measurement gap length MGL and the measurement gap repetition period MGRP of each of the one or more MOs. The first measurement gap pattern includes a first MGL and a first MGRP.

The MG pattern includes one or more parameters for measurement. For example, the MG pattern may include the MGL and the MGRP. Optionally, the MG pattern may further include an MG identity (Identity, ID). That measurement of the one or more measurement objects supports switching between at least two measurement gap patterns (MG patterns) may be understood as that the terminal device may switch from performing MG-based measurement based on an MG pattern to performing MG-based measurement based on another MG pattern. Different MG patterns include at least one different parameter. For example, different MG patterns include different MGLs. In this application, the MGL in the MG pattern is greater than 0.

That measurement of the one or more measurement objects supports switching between at least two measurement gap patterns (MG patterns) means that the measurement of the one or more measurement objects supports switching between two different MG patterns.

For example, when the terminal device performs MO-based measurement on the one or more MOs based on an MG pattern 1, the terminal device may switch to performing MO-based measurement on the one or more MOs based on an MG pattern 2.

Specifically, in this application, step 4022A may include: The terminal device determines the first MGL based on the MGL corresponding to the one or more measurement objects, and determines the first MGRP based on the MGRP corresponding to the one or more measurement objects.

Step 5022A may include: The first network device determines the first MGL based on the MGL corresponding to the one or more measurement objects, and determines the first MGRP based on the MGRP corresponding to the one or more measurement objects.

It may be understood that the first MGL is determined based on the MGL corresponding to the one or more MOs. For example, the first MGL is a largest value in the MGL corresponding to the one or more measurement objects.

The first MGRP is obtained based on the MGRP corresponding to the one or more MOs. For example, the first MGRP is a smallest value in the MGRP corresponding to the one or more measurement objects.

In an example, an MGRP corresponding to an MO 1 is 160 ms, and an MGRP corresponding to an MO 2 is 40 ms. When the terminal device works in the first BWP group, the MO 1 involves the measurement gap, and the MO 2 does not involve the measurement gap. In this case, the terminal device and the first network device determine that the MGRP in the first MG pattern is 160 ms, and the first network device and the terminal device may dynamically switch to the MGRP of 160 ms. This avoids frequent data interruption caused by an MGRP of 40 ms, implements throughput improvement, and maximizes an application scenario of MG activation and deactivation.

In this way, it can be ensured that the first MGL and the first MGRP that are used by a first terminal for measurement can satisfy a requirement of measuring each of the one or more MOs by the terminal device, and the network device does not schedule the terminal device within the first MGL. This helps the terminal device better measure the one or more measurement objects, and avoids the packet loss caused by the excessively short MGL.

In another possible implementation, measurement of the one or more measurement objects supports only switching between the no-measurement-gap measurement and the measurement-gap-based measurement performed based on a measurement gap pattern. The measurement gap information corresponding to the one or more measurement objects includes the measurement gap pattern of the one or more measurement objects.

Step 4022A may include: The terminal device determines, based on the measurement gap information corresponding to the one or more measurement objects, that the first measurement gap pattern is the measurement gap pattern in the measurement gap information corresponding to the one or more measurement objects.

Step 5022A may include: The first network device determines, based on the measurement gap information corresponding to the one or more measurement objects, that the first measurement gap pattern is the measurement gap pattern in the measurement gap information corresponding to the one or more measurement objects.

In this case, measurement performed by the terminal device on the MO supports only two measurement manners: One is performing non-MG-based measurement, and the other is performing MG-based measurement based on an MG pattern configured by the network device. In other words, in this case, the measurement performed by the terminal device on the MO supports only switching between no-gap and gap, but does not support switching between different MG patterns.

The measurement gap information corresponding to the one or more measurement objects includes an MG pattern used by the terminal device to perform MG-based measurement. When determining that the MG-based measurement needs to be performed, the terminal device may perform measurement based on the MG pattern. When determining that the terminal device needs to perform MG-based measurement, the first network device may schedule the terminal device based on the MG pattern.

In some examples, whether the terminal device can switch between the different MG patterns is specified in the standard.

In some other examples, whether the terminal device can switch between the different MG patterns is configured by the network device. The network device may perform configuration in an explicit configuration manner or an implicit configuration manner.

For example, the first network device may implicitly indicate, by configuring per UE MG pattern or per frequency range MG pattern (per FR MG pattern), that the terminal device can switch only between gap and no-gap, and is not allowed to switch between the different MG patterns. Otherwise, the terminal device can switch between the different MG patterns.

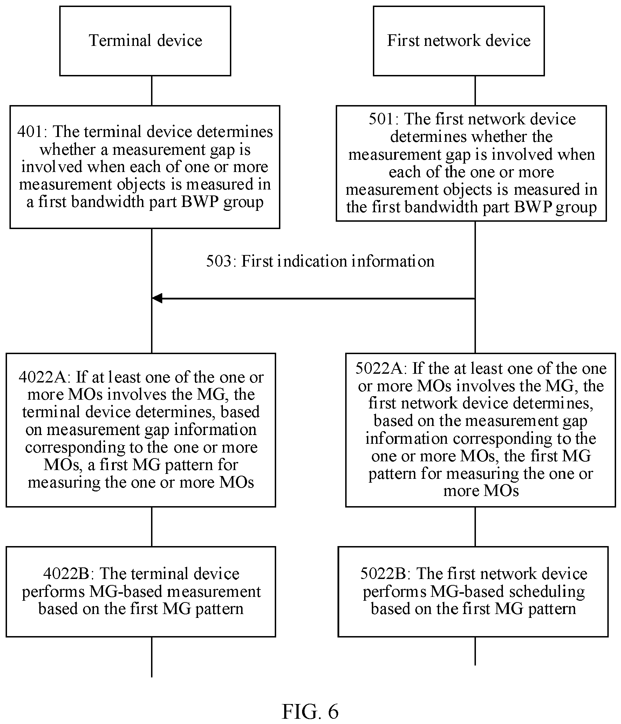

For another example, the first network device may explicitly indicate, through signaling indication, whether the terminal device can switch between the different MG patterns. Specifically, in a schematic flowchart shown in FIG. 6, before step 4022A and step 5022A, the measurement method may further include the following step.

503: The first network device sends first indication information to the terminal device.

Accordingly, the terminal device receives the first indication information sent by the first network device.

The first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern. The first indication information may be sent by using radio resource control (radio resource control, RRC) signaling.

In this way, the terminal device can obtain information indicating whether the switching between the different MG patterns can be performed.

The measurement gap information corresponding to the one or more MOs is sent by the first network device to the terminal device.

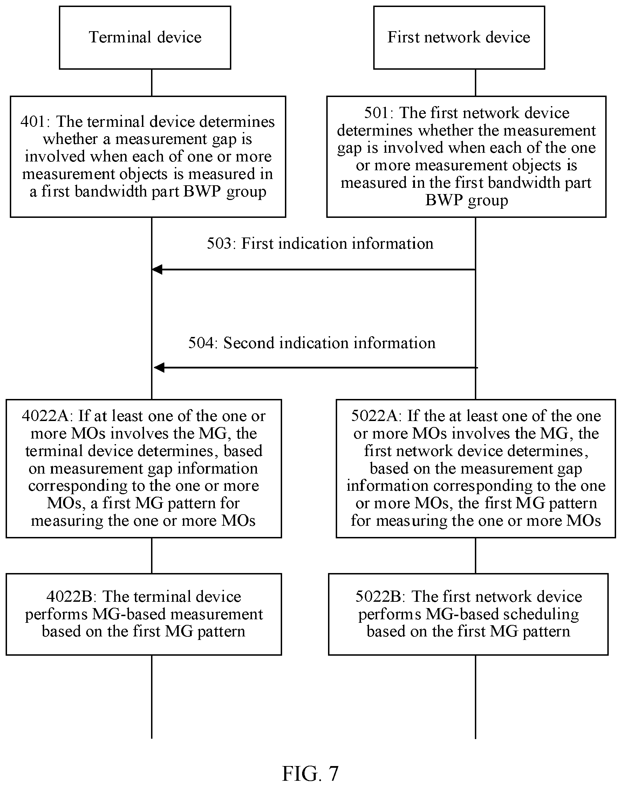

Specifically, in the schematic flowchart shown in FIG. 7, the measurement method may further include the following step.

504: The first network device sends second indication information to the terminal device, where the second indication information indicates the measurement gap information corresponding to the one or more measurement objects.

Accordingly, the terminal device receives the second indication information sent by the first network device, where the second indication information indicates the measurement gap information corresponding to the one or more measurement objects. In this way, the terminal device and the network device determine the first measurement pattern based on same measurement gap information corresponding to the one or more MOs, and the measurement gap information is aligned between the terminal device and the network device, so that the terminal device and the network device obtain a same first measurement pattern.

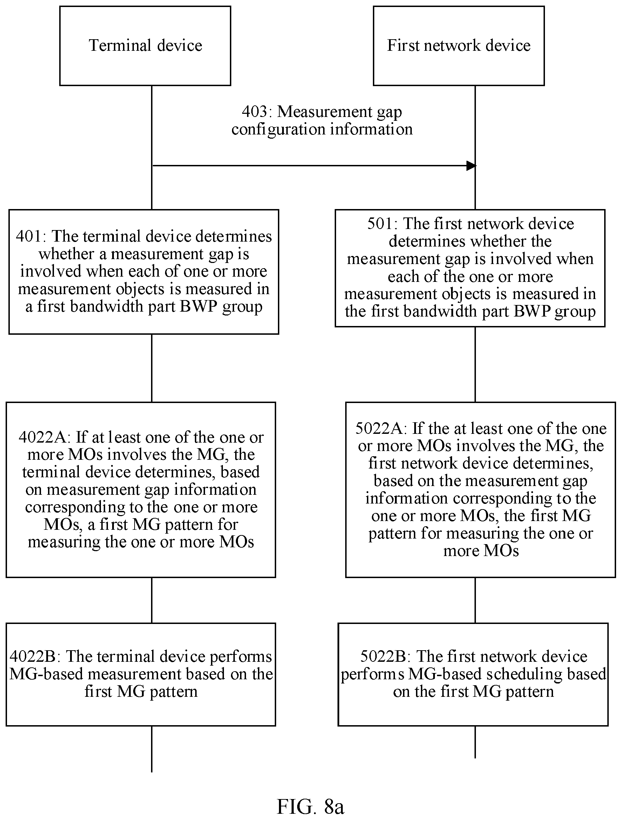

Dual connections are established between the terminal device and both the first network device and a second network device. In a schematic flowchart shown in FIG. 8a, the measurement method further includes the following step.

403: The terminal device sends, to the first network device, measurement gap configuration information corresponding to one or more measurement objects corresponding to a measurement object group.

The one or more measurement objects in the measurement object group are configured by the second network device. The measurement gap configuration information corresponding to the measurement object group includes that measurement of the measurement object in the measurement object group does not involve the measurement gap, or includes measurement gap information corresponding to the measurement object in the measurement object group. There may be one or more measurement objects in the measurement object group.

Accordingly, the first network device receives the measurement gap information that corresponds to the one or more measurement objects corresponding to the measurement object group and that is sent by the terminal device.

For example, the first network device may not have information about one or more MOs that the second network device needs to measure, and therefore cannot determine whether the one or more MOs configured by the second network device need the measurement gap. In this case, the terminal device may send, to the first network device, measurement gap information of the MO that the second network device needs to measure.

It should be understood that the one or more measurement objects in step 401 and step 501 include the measurement object in the measurement object group.

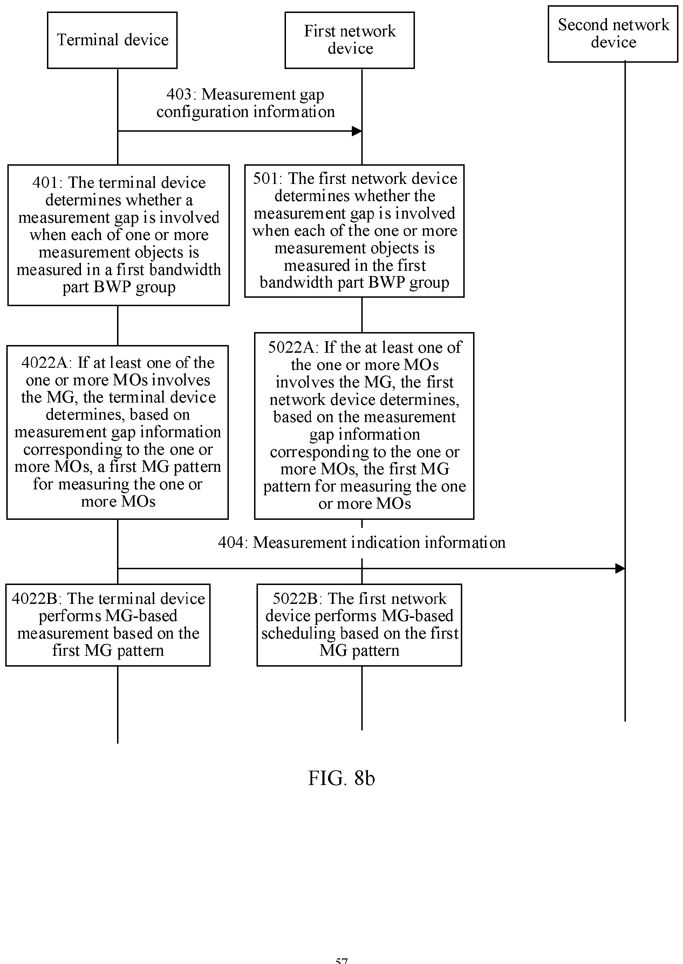

Optionally, in a schematic flowchart shown in FIG. 8b, the measurement method may further include the following step.

404: The terminal device sends measurement indication information to the second network device.

The measurement indication information indicates that measurement performed by the terminal device on none of the one or more measurement objects in the first BWP group involves the MG, or indicates the first MG pattern used by the terminal device to measure the one or more measurement objects in the first BWP group, and the first BWP group includes the active BWP of the one or more serving cells of the terminal device.

It may be understood that the content indicated by the measurement indication information is obtained based on step 4022A or a determining result in step 401.

In this way, the second network device can perform non-MG-based scheduling based on the measurement indication information, or perform MG-based scheduling based on the first measurement gap pattern.

For example, the second network device performs non-MG-based scheduling on the terminal device if the measurement indication information indicates that the measurement performed by the terminal device on none of the one or more measurement objects in the first BWP group involves the MG.

For another example, the second network device performs MG-based scheduling on the terminal device based on the first measurement gap pattern if the measurement indication information indicates the first measurement gap pattern used by the terminal device to measure the one or more measurement objects in the first BWP group.

For example, the indication information in step 404 may be carried in layer1 (layer1, L1) or layer2 (layer2, L2) signaling.

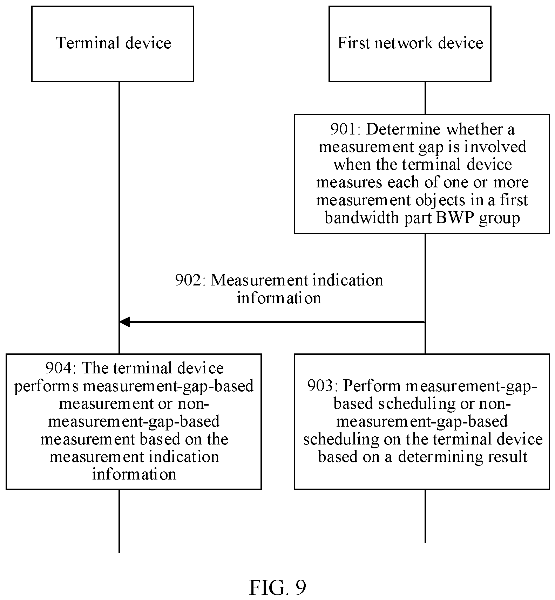

In a schematic flowchart shown in FIG. 9, a measurement method in this application includes the following steps.

901: A first network device determines whether a measurement gap is involved when a terminal device measures each of one or more measurement objects in a first bandwidth part BWP group.

It should be understood that the descriptions of the specific implementation of step 501 are also applicable to step 901. Details are not described herein again.

902: The first network device sends measurement indication information to the terminal device, where the measurement indication information indicates the terminal device to measure the one or more measurement objects in the first BWP group without involving the measurement gap MG, or indicates a first MG pattern for measuring the one or more measurement objects.

For a manner of determining the first MG pattern, refer to the manner of determining the first MG pattern by the first network device in the solutions corresponding to FIG. 5c and FIG. 5d.

903: The first network device performs measurement-gap-based scheduling or non-measurement-gap-based scheduling on the terminal device based on a determining result.

It should be understood that the descriptions of the specific implementation of step 502 are also applicable to step 902. Details are not described herein again.

904: The terminal device performs measurement-gap-based measurement or non-measurement-gap-based measurement based on the measurement indication information.

Specifically, the terminal device performs non-measurement-gap-based measurement if the indication information indicates the terminal device to measure the one or more measurement objects in the first BWP group without involving the measurement gap.

The terminal device performs measurement-gap-based measurement based on the first measurement gap pattern if the indication information indicates the first measurement gap pattern for measuring the one or more measurement objects.

In the technical solution in this application, the first network device sends the measurement indication information to the terminal device, so that the terminal device and the network device use a same policy to determine whether measurement of the terminal device is based on the MG. In this way, information can be aligned between the terminal device and the network device.

Any one of the foregoing method embodiments may be used in any one of the foregoing scenarios a, b, c, and d. The following provides some more specific solutions for the scenarios b, c, and d.

It should be understood that, in the scenarios b, c, and d, a serving cell provided by a gNB supports BWP switching, and a serving cell provided by an eNB does not support the BWP switching.
(1) In the EN-DC scenario (the scenario b), an MN is the eNB, and an SN is the gNB. A first network device is the SN, and a second network device is the MN.

In some implementations, per UE gap or per FR gap for FR1 is configured for a terminal device. The per UE gap means that gaps of the terminal device in a plurality of serving cells are the same. The per FR gap for FR1 means that gaps of the terminal device in all frequency bands in FR1 are the same.

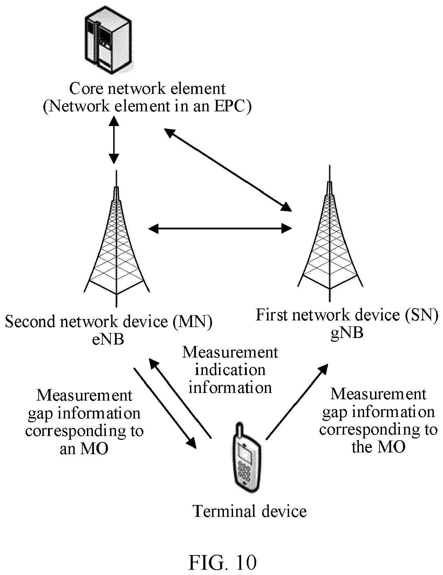

In a schematic diagram of a scenario shown in FIG. 10, the measurement method may further include the following step.

The terminal device sends, to the first network device (the SN), measurement gap information that corresponds to an MO and that is configured by the second network device (the MN), where the measurement gap information corresponding to the MO is configured by the second network device.

In other words, the terminal device reports, to the SN, the measurement gap information that corresponds to the MO and that is configured by the MN.

It should be understood that, in the EN-DC scenario (the scenario b), the MN is the eNB, and the SN is the gNB. The SN is unaware of an MO that the MN needs to measure. The MN does not support the BWP switching. In this way, when the MN needs to measure the MO, measurement gap information corresponding to the MO that the MN needs to measure is statically configured. The measurement gap information corresponding to the MO that the MN needs to measure includes an MG pattern corresponding to the MO and whether the MO needs an MG. The MG pattern corresponding to the MO may alternatively be understood as a preferred MG pattern associated with the MO. It should be understood that, in this embodiment, there may be one or more MOs that the MN needs to measure. If the MN does not associate a preferred MG pattern with each MO, UE determines that an MG pattern needed by each MO configured by the MN is an MG pattern of the per UE gap or the per FR gap for FR1 configured by the MN or no-gap.

After the terminal device reports, to the SN, the measurement gap information that corresponds to the MO and that is configured by the MN, the terminal device may perform the measurement method in any one of the foregoing embodiments, and the first network device (the SN) may perform the scheduling method in any one of the foregoing embodiments, to determine whether a measurement process involves the MG, and determine a first MG pattern specifically used for measurement when the measurement process involves the MG.

For example, when the terminal device switches to a first BWP group in a serving cell of the SN, if measurement performed by the terminal device on one or more MGs does not involve the MG, the terminal device performs non-MG-based measurement, and the SN performs non-MG-based scheduling on the terminal device; or if measurement performed by the terminal device on one or more MGs involves the MG, the terminal device performs MG-based measurement based on the first MG pattern, and the SN performs MG-based scheduling on the terminal device based on the first MG.

Optionally, the measurement method may further include steps.

The terminal device may send measurement indication information to the second network device (the MN), where the measurement indication information indicates that measurement performed by the terminal device on the one or more MOs in the first BWP group does not involve the MG, or indicates the first MG pattern used by the terminal device to measure the one or more measurement objects in the first BWP group. The second network device performs non-measurement-gap-based scheduling based on the measurement indication information, or performs measurement-gap-based scheduling based on the first measurement gap pattern.

The second network device performs non-MG-based scheduling on the terminal device if the measurement indication information indicates that the measurement performed by the terminal device on none of the one or more measurement objects in the first BWP group involves the measurement gap.

The second network device performs MG-based scheduling on the terminal device based on the first measurement gap pattern if the measurement indication information indicates the first measurement gap pattern used by the terminal device to measure the one or more measurement objects in the first BWP group.

In this way, the terminal device may send the measurement indication information to the second network device, so that MG-related information in the measurement process is aligned between the terminal device and the second network device.

For example, when the terminal device switches to the first BWP group, the terminal device may send the measurement indication information to the second network device (the MN) via layer1 (layer1, L 1) or layer2 (layer2, L2) signaling.

It should be understood that an MGL in the first MG pattern cannot exceed an MGL indicated by the per UE gap or per FR gap for FR1.

In some other implementations, per FR gap for FR2 is configured for a terminal device. The per FR gap for FR2 means that the terminal device performs measurement based on a same MG in all frequency bands in FR2. The terminal device performs measurement based on a first MG pattern, and the first network device performs scheduling based on the first MG pattern.

(2) In the NE-DC scenario (the scenario b), an MN is the gNB, and an SN is the eNB. A first network device is the MN, and a second network device is the SN.

In some implementations, per UE gap or per FR gap for FR1 is configured for a terminal device.

The SN (the second network device) configures corresponding measurement gap information for an MO that needs to be measured, where the measurement gap information includes an MG pattern corresponding to the MO and whether the MO needs an MG. The MG pattern corresponding to the MO may alternatively be understood as a preferred MG pattern associated with the MO. It should be understood that, in this embodiment, there may be one or more MOs that the MN needs to measure.

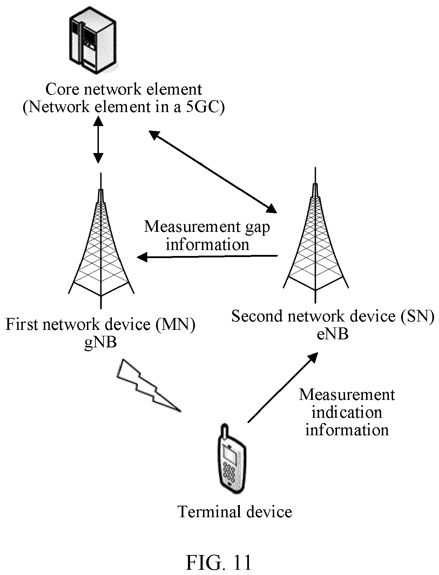

In a schematic diagram of a scenario shown in FIG. 11, the SN (the second network device) may send the measurement gap information to the MN (the first network device) through an Xn interface. In this way, the terminal device may perform the measurement method in any one of the foregoing embodiments, and the first network device (the MN) may perform the scheduling method in any one of the foregoing embodiments, to determine whether a measurement process involves the MG, and determine a first MG pattern specifically used for measurement when the measurement process involves the MG.

For example, the MN and the terminal device determine that measurement of one or more MGs does not involve the MG, or determine, when measurement of one or more MGs involves the MG, the first MG pattern for measuring the one or more MOs.

When the terminal device switches to a first BWP group in a serving cell of the MN, if the measurement of the one or more MGs does not involve the MG, the terminal device performs non-MG-based measurement, and the MN performs non-MG-based scheduling on the terminal device; or if the measurement of the one or more MGs involves the MG, the terminal device performs MG-based measurement based on the first MG pattern, and the MN performs MG-based scheduling on the terminal device based on the first MG.

If the SN does not configure the corresponding measurement gap information for the MO that needs to be measured, the MN may determine, based on per UE gap or per FR gap for FR1, measurement gap information of each MO that the SN needs to measure.

Optionally, the terminal device may send measurement indication information to the SN (the second network device), to indicate the SN to perform non-MG-based scheduling on the terminal device, or indicate the SN to perform MG-based scheduling on the terminal device based on the first MG pattern. The SN performs non-MG-based scheduling based on the measurement indication information, or performs MG-based scheduling on the terminal device based on the first MG pattern.

For example, when the terminal device switches to the first BWP group, the terminal device may send the measurement indication information to the second network device (the MN) via layer1 (layer1, L 1) or layer2 (layer2, L2) signaling.

If per FR gap for FR2 is configured for the terminal device, the terminal device performs measurement based on the first MG pattern obtained in the foregoing embodiment of the measurement method, and the first network device performs scheduling based on the first MG pattern obtained in the foregoing embodiment of the measurement method.

(3) In the NR-DC scenario (the scenario d), both a first network device and a second network device are gNBs.

In some implementations, the first network device is an MN, the second network device is an SN, and BWP switching occurs in a serving cell of the MN.

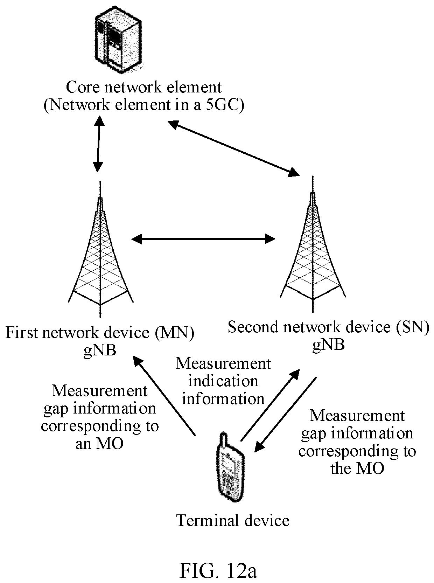

In a schematic diagram of a scenario shown in FIG. 12a, the SN configures corresponding measurement gap information for an MO that needs to be measured, and sends the measurement gap information of the MO to a terminal device.

The terminal device may send, to the MN (the first network device), the measurement gap information that corresponds to the MO and that is configured by the SN. The measurement gap information includes an MG pattern corresponding to the MO and whether the MO needs an MG. The MG pattern corresponding to the MO may alternatively be understood as a preferred MG pattern associated with the MO. It should be understood that, in this embodiment, there may be one or more MOs that the SN needs to measure. If an SSB corresponding to an MO may be included in all BWPs of a PSCell of an SN, the terminal device considers that measurement of the MO does not need the MG; otherwise, the terminal device considers that measurement of the MO needs the MG.

In this way, the terminal device may perform the measurement method in any one of the foregoing embodiments, and the first network device (the MN) may perform the scheduling method in any one of the foregoing embodiments, to determine whether a measurement process involves the MG, and determine a first MG pattern specifically used for measurement when the measurement process involves the MG.

For example, the MN and the terminal device determine that measurement of one or more MGs does not involve the MG, or determine, when measurement of one or more MGs involves the MG, the first MG pattern for measuring the one or more MOs.

When the terminal device switches to a first BWP group in a serving cell of the MN, if the measurement of the one or more MGs does not involve the MG, the terminal device performs non-MG-based measurement, and the MN performs non-MG-based scheduling on the terminal device; or if the measurement of the one or more MGs involves the MG, the terminal device performs MG-based measurement based on the first MG pattern, and the MN performs MG-based scheduling on the terminal device based on the first MG.

If the SN does not configure corresponding measurement gap information for an MO that needs to be measured, a terminal device may determine that measurement gap information of each MO that the SN needs to measure includes an MG pattern configured by the MN or no-gap.

Optionally, the terminal device may send measurement indication information to the second network device (the SN). The measurement indication information indicates the SN to perform non-MG-based scheduling on the terminal device, or indicates the SN to perform MG-based scheduling on the terminal device based on a first MG pattern.

For example, when the terminal device switches to a first BWP group, the terminal device may send the measurement indication information to the second network device (the SN) via layer 1 (layer1, L1) or layer2 (layer2, L2) signaling.

The SN performs non-MG-based scheduling based on the measurement indication information, or performs MG-based scheduling on the terminal device based on the first MG pattern.

In some other implementations, the first network device is an SN, the second network device is an MN, and BWP switching occurs in a serving cell of the SN.

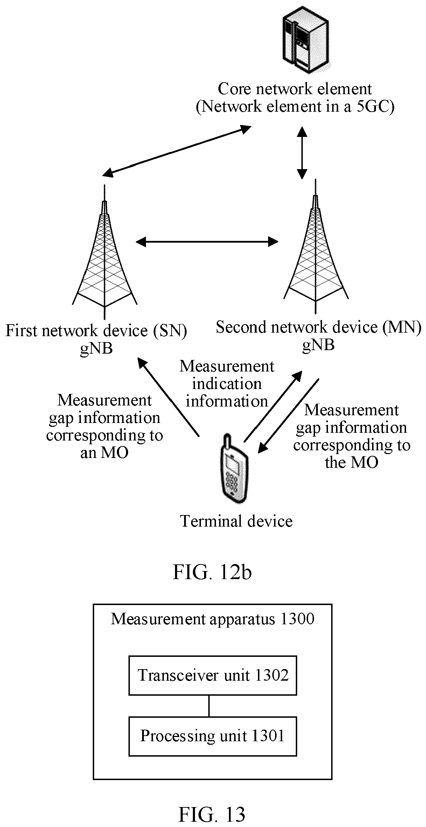

In a schematic diagram of a scenario shown in FIG. 12b, the MN configures corresponding measurement gap information for an MO that needs to be measured, and sends the measurement gap information of the MO to a terminal device.

The terminal device may send, to the SN (the first network device), the measurement gap information that corresponds to the MO and that is configured by the MN. The measurement gap information includes an MG pattern corresponding to the MO and whether the MO needs an MG. The MG pattern corresponding to the MO may alternatively be understood as a preferred MG pattern associated with the MO. If an SSB corresponding to an MO may be included in all BWPs of a PSCell of an SN, the terminal device considers that measurement of the MO does not need the MG; otherwise, the terminal device considers that measurement of the MO needs the MG. It should be understood that, in this embodiment, there may be one or more MOs that the MN needs to measure.

In this way, the terminal device may perform the measurement method in any one of the foregoing embodiments, and the first network device (the SN) may perform the scheduling method in any one of the foregoing embodiments, to determine whether a measurement process involves the MG, and determine a first MG pattern specifically used for measurement when the measurement process involves the MG.

For example, when the terminal device switches to a first BWP group in the serving cell of the SN, if measurement performed by the terminal device on one or more MGs does not involve the MG, the terminal device performs non-MG-based measurement, and the SN performs non-MG-based scheduling on the terminal device; or if measurement performed by the terminal device on one or more MGs involves the MG, the terminal device performs MG-based measurement based on the first MG pattern, and the SN performs MG-based scheduling on the terminal device based on the first MG.

If the MN does not configure corresponding measurement gap information for an MO that needs to be measured, a terminal device may determine that measurement gap information of each MO that the MN needs to measure includes an MG pattern configured by the MN or no-gap.

Optionally, the terminal device may send measurement indication information to the second network device (the MN). The measurement indication information indicates the MN to perform non-MG-based scheduling on the terminal device, or indicates the MN to perform MG-based scheduling on the terminal device based on a first MG pattern.

The second network device performs non-MG-based scheduling on the terminal device if the measurement indication information indicates that measurement performed by the terminal device on none of one or more measurement objects in a first BWP group involves a measurement gap.

The second network device performs MG-based scheduling on the terminal device based on the first measurement gap pattern if the measurement indication information indicates the first measurement gap pattern used by the terminal device to measure one or more measurement objects in a first BWP group.

For example, when the terminal device switches to the first BWP group, the terminal device may send the measurement indication information to the second network device (the SN) via layer 1 (layer1, L1) or layer2 (layer2, L2) signaling.

In a schematic diagram of a structure shown in FIG. 13, an implementation of this application provides a measurement apparatus 1300. The measurement apparatus 1300 may be a terminal device, or may be used in a terminal device. The measurement apparatus 1300 includes a processing unit 1301 and a transceiver unit 1302. The processing unit 1301 is configured to: determine whether a measurement gap is involved when each of one or more measurement objects is measured in a first bandwidth part BWP group, where the first BWP group includes an active BWP of one or more serving cells of the terminal device; and control, based on a determining result, the transceiver unit 1302 to perform measurement-gap-based measurement or non-measurement-gap-based measurement.

In this way, the terminal device can determine, based on a measurement gap requirement proposed when the terminal device actually measures the measurement object, whether to perform measurement-gap-based measurement. This can help avoid unnecessary interruption when the terminal device switches a BWP, and help data transmission efficiency.

In some implementations, in an aspect of the controlling, based on a determining result, the transceiver unit 1302 to perform measurement-gap-based measurement or non-measurement-gap-based measurement, the processing unit 1301 is specifically configured to:
control, if none of the one or more measurement objects involves the measurement gap, the transceiver unit 1302 to perform non-measurement-gap-based measurement.

In some implementations, in the aspect of the controlling, based on a determining result, the transceiver unit 1302 to perform measurement-gap-based measurement or non-measurement-gap-based measurement, the processing unit 1301 is specifically configured to:
control, if at least one of the one or more measurement objects involves the measurement gap, the transceiver unit 1302 to perform measurement-gap-based measurement.

In some implementations, in an aspect of the controlling, if at least one of the one or more measurement objects involves the measurement gap, the transceiver unit 1302 to perform measurement-gap-based measurement, the processing unit 1301 is specifically configured to:
if the at least one of the one or more measurement objects involves the measurement gap, determine, based on measurement gap information corresponding to the one or more measurement objects, a first measurement gap pattern for measuring the one or more measurement objects; and
control, based on the first measurement gap pattern, the transceiver unit 1302 to perform measurement-gap-based measurement.

In some implementations, the measurement gap information corresponding to the one or more measurement objects includes a measurement gap length and a measurement gap repetition period of each of the one or more measurement objects, and the first measurement gap pattern includes a first measurement gap length and a first measurement gap period; and
if measurement of the one or more measurement objects supports switching between at least two measurement gap patterns, in an aspect of the determining, based on measurement gap information corresponding to the one or more measurement objects, a first measurement gap pattern for measuring the one or more measurement objects, the processing unit 1301 is specifically configured to:
determine the first measurement gap length based on the measurement gap length corresponding to the one or more measurement objects, and determine the first measurement gap pattern based on the measurement gap pattern corresponding to the one or more measurement objects.

In some implementations, the first measurement gap length is a largest value in the measurement gap length corresponding to the one or more measurement objects, and the first measurement gap period is a smallest value in the measurement gap period corresponding to the one or more measurement objects.

In some implementations, the measurement gap information corresponding to the one or more measurement objects includes a measurement gap pattern of the one or more measurement objects; and
if measurement of the one or more measurement objects supports only switching between the no-measurement-gap measurement and the measurement-gap-based measurement that is performed based on a measurement gap pattern, in an aspect of the determining, based on measurement gap information corresponding to the one or more measurement objects, a first measurement gap pattern for measuring the one or more measurement objects, the processing unit 1301 is specifically configured to:
determine, based on the measurement gap information corresponding to the one or more measurement objects, that the first measurement gap pattern is the measurement gap pattern in the measurement gap information corresponding to the one or more measurement objects.

In some implementations, before the determining, for the terminal device based on measurement gap information corresponding to the one or more measurement objects, a first measurement gap pattern for measuring the one or more measurement objects, the transceiver unit 1302 is configured to receive first indication information sent by a first network device, where
the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

In some implementations, the transceiver unit 1302 is configured to receive second indication information sent by the first network device, where the second indication information indicates the measurement gap information corresponding to the one or more measurement objects.

In some implementations, dual connections are established between the terminal device and both the first network device and a second network device, and the transceiver unit 1302 is configured to send measurement gap configuration information corresponding to a measurement object group to the first network device, where a measurement object in the measurement object group is configured by the second network device, and the measurement gap configuration information corresponding to the measurement object group includes that measurement of the measurement object in the measurement object group does not involve the measurement gap, or includes measurement gap information corresponding to the measurement object in the measurement object group.

In some implementations, the dual connections are established between the terminal device and both the first network device and the second network device, and the transceiver unit 1302 is configured to send measurement indication information to the second network device, where the measurement indication information indicates that measurement performed by the terminal device on none of the one or more measurement objects in the first BWP group involves the measurement gap, or indicates the first measurement gap pattern used by the terminal device to measure the one or more measurement objects in the first BWP group.

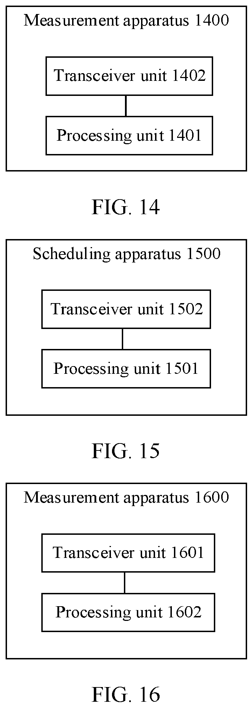

In a schematic diagram of a structure shown in FIG. 14, an implementation of this application provides a measurement apparatus 1400. The measurement apparatus 1400 may be a terminal device, or may be used in a terminal device. The measurement apparatus 1400 includes:
a transceiver unit 1401, configured to receive first measurement indication information sent by a first network device, where the first measurement indication information indicates the terminal device to measure one or more measurement objects in a first BWP group without involving a measurement gap, or indicates a first measurement gap pattern to be used by the terminal device to measure one or more measurement objects in a first BWP group, and the first BWP group includes an active BWP of one or more serving cells of the terminal device; and
a processing unit 1402, configured to control, based on the measurement indication information, the transceiver unit 1401 to perform measurement-gap-based measurement or non-measurement-gap-based measurement.

In such a technical solution, the terminal device and the network device use a same policy to determine whether measurement of the terminal device is based on the MG. In this way, information can be aligned between the terminal device and the network device.

In some implementations, in an aspect of the controlling, based on the measurement indication information, the transceiver unit 1401 to perform measurement-gap-based measurement or non-measurement-gap-based measurement, the processing unit 1402 is specifically configured to:
control, if the indication information indicates the terminal device to measure the one or more measurement objects in the first BWP group without involving the measurement gap, the transceiver unit 1401 to perform non-measurement-gap-based measurement.

In some implementations, in the aspect of the performing measurement-gap-based measurement or non-measurement-gap-based measurement based on the measurement indication information, the processing unit 1402 is specifically configured to:
control, based on the first measurement gap pattern if the indication information indicates the first measurement gap pattern to be used by the terminal device to measure the one or more measurement objects in the first BWP group, the transceiver unit 1401 to perform measurement-gap-based measurement.

In some implementations, dual connections are established between the terminal device and both the first network device and a second network device, and the transceiver unit 1401 is configured to send measurement gap information corresponding to the one or more measurement objects to the first network device, where the one or more measurement objects are configured by the second network device.

In some implementations, the dual connections are established between the terminal device and both the first network device and the second network device, and the transceiver unit 1401 is configured to send second measurement indication information to the second network device, where the first measurement indication information indicates that measurement performed by the terminal device on the one or more measurement objects in the first BWP group does not involve the measurement gap, or indicates the first measurement gap pattern used by the terminal device to measure the one or more measurement objects in the first BWP group.

It should be understood that the transceiver unit in any embodiment of the foregoing measurement apparatus may be implemented by using the transceiver 1212 in the embodiment corresponding to FIG. 2b. The processing unit in any embodiment of the foregoing measurement apparatus may be implemented by using the processor 1211 in the embodiment corresponding to FIG. 2b. In a schematic diagram of a structure shown in FIG. 15, an implementation of this application provides a scheduling apparatus 1500. The scheduling apparatus 1500 may be a first network device, or may be used in a first network device. The scheduling apparatus 1500 includes a processing unit 1501 and a transceiver unit 1502. The processing unit 1501 is configured to:
determine whether a measurement gap is involved when a terminal device measures each of one or more measurement objects in a first bandwidth part BWP group; and
control, based on a determining result, the transceiver unit 1502 to perform measurement-gap-based scheduling or non-measurement-gap-based scheduling on the terminal device.

According to the technical solution in this application, the first network device can determine, based on a measurement gap requirement proposed when the terminal device actually measures the measurement object, whether to perform measurement-gap-based scheduling. This can help avoid unnecessary interruption when the terminal device switches a BWP, and help data transmission efficiency.

In some implementations, in an aspect of the controlling, based on a determining result, the transceiver unit 1502 to perform measurement-gap-based scheduling or non-measurement-gap-based scheduling, the processing unit 1501 is specifically configured to:
control, if none of the one or more measurement objects involves the measurement gap, the transceiver unit 1502 to perform non-measurement-gap-based scheduling on the terminal device.

In some implementations, in the aspect of the controlling, based on a determining result, the transceiver unit 1502 to perform measurement-gap-based scheduling or non-measurement-gap-based scheduling, the processing unit 1501 is specifically configured to:
control, if at least one of the one or more measurement objects involves the measurement gap, the transceiver unit 1502 to perform measurement-gap-based scheduling on the terminal device.

In some implementations, in an aspect of the controlling, if at least one of the one or more measurement objects involves the measurement gap, the transceiver unit 1502 to perform measurement-gap-based scheduling on the terminal device, the processing unit 1501 is specifically configured to:
if the at least one of the one or more measurement objects involves the measurement gap, determine, based on measurement gap information corresponding to the one or more measurement objects, a first measurement gap pattern for measuring the one or more measurement objects; and
control, based on the first measurement gap pattern, the transceiver unit 1502 to perform measurement-gap-based scheduling on the terminal device.

In some implementations, the measurement gap information corresponding to the one or more measurement objects includes a measurement gap length and a measurement gap repetition period of each of the one or more measurement objects, and the first measurement gap pattern includes a first measurement gap length and a first measurement gap period; and
if measurement performed by the terminal device on the one or more measurement objects supports switching between at least two measurement gap patterns, in an aspect of the determining, based on measurement gap information corresponding to the one or more measurement objects, a first measurement gap pattern for scheduling the one or more measurement objects, the processing unit 1501 is specifically configured to:
determine the first measurement gap length based on the measurement gap length corresponding to the one or more measurement objects, and determine the first measurement gap pattern based on the measurement gap pattern corresponding to the one or more measurement objects.

In some implementations, the first measurement gap length is a largest value in the measurement gap length corresponding to the one or more measurement objects, and the first measurement gap period is a smallest value in the measurement gap period corresponding to the one or more measurement objects.

In some implementations, the measurement gap information corresponding to the one or more measurement objects includes a measurement gap pattern of the one or more measurement objects; and
if measurement performed by the terminal device on the one or more measurement objects supports only switching between non-measurement-gap-based measurement and measurement-gap-based measurement performed based on a measurement gap pattern, in an aspect of the determining, based on measurement gap information corresponding to the one or more measurement objects, a first measurement gap pattern for scheduling the one or more measurement objects, the processing unit 1501 is specifically configured to:
determine, based on the measurement gap information corresponding to the one or more measurement objects, that the first measurement gap pattern is the measurement gap pattern in the measurement gap information corresponding to the one or more measurement objects.

In some implementations, the transceiver unit 1502 is configured to send second indication information to the terminal device, where
the second indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

In some implementations, the transceiver unit 1502 is configured to send second indication information to the terminal device, where the second indication information indicates the measurement gap information corresponding to the one or more measurement objects.

In some implementations, dual connections are established between the terminal device and both the first network device and a second network device, and the transceiver unit 1502 is configured to receive measurement gap configuration information sent by the terminal device, where
a measurement object in a measurement object group is configured by the second network device, and the measurement gap configuration information corresponding to the measurement object group includes that measurement of the measurement object in the measurement object group does not involve the measurement gap, or includes measurement gap information corresponding to the measurement object in the measurement object group.

In some implementations, the transceiver unit 1502 is configured to send measurement indication information to the terminal device based on the determining result, where the measurement indication information indicates the terminal device to measure the one or more measurement objects in the first BWP group without involving the measurement gap, or indicates the first measurement gap pattern, and the first measurement gap information is used by the terminal device to measure the one or more measurement objects in the first BWP group.

In a schematic diagram of a structure shown in FIG. 16, an implementation of this application provides a scheduling apparatus 1600. The scheduling apparatus 1600 may be a second network device, or may be used in a second network device. The scheduling apparatus 1600 includes:
a transceiver unit 1601, configured to receive measurement indication information sent by a terminal device, where the measurement indication information indicates that measurement performed by the terminal device on none of one or more measurement objects in a first BWP group involves a measurement gap, or indicates a first measurement gap pattern used by the terminal device to measure one or more measurement objects in a first BWP group, and the first BWP group includes an active BWP of one or more serving cells of the terminal device; and
a processing unit 1602, configured to perform non-measurement-gap-based scheduling based on the measurement indication information, or control, based on the first measurement gap pattern, the transceiver unit 1601 to perform measurement-gap-based scheduling.

In this way, information can be aligned between the terminal device and the network device, so that the second network device can schedule the terminal device by using a scheduling policy corresponding to a measurement policy of the terminal device. This helps avoid unnecessary data interruption and improve data transmission efficiency.

In some implementations, in an aspect of the controlling, based on the measurement indication information, the transceiver unit 1601 to perform non-measurement-gap-based scheduling, or controlling, based on the first measurement gap pattern, the transceiver unit 1601 to perform measurement-gap-based scheduling, the processing unit 1602 is specifically configured to:
control, if the measurement indication information indicates that the measurement performed by the terminal device on none of the one or more measurement objects in the first BWP group involves the measurement gap, the transceiver unit 1601 to perform non-measurement-gap-based scheduling on the terminal device.

In some implementations, in the aspect of the controlling, based on the measurement indication information, the transceiver unit 1601 to perform non-measurement-gap-based scheduling, or performing measurement-gap-based scheduling based on the first measurement gap pattern, the processing unit 1602 is specifically configured to:
control, if the measurement indication information indicates the first measurement gap pattern used by the terminal device to measure the one or more measurement objects in the first BWP group, the transceiver unit 1601 to perform measurement-gap-based scheduling on the terminal device based on the first measurement gap pattern.

It may be understood that the transceiver unit in any embodiment of the foregoing scheduling apparatus may be implemented by using the transceiver 1113 in the embodiment corresponding to FIG. 2a. The processing unit in any embodiment of the foregoing scheduling apparatus may be implemented by using the processor 1111 in the embodiment corresponding to FIG. 2a.

It should be understood that, related supplementary descriptions and beneficial effects in the measurement methods in the implementations of this application are also applied to the measurement apparatuses in the implementations of this application, and related supplementary descriptions and beneficial effects in the scheduling methods in the implementations of this application are also applied to the scheduling apparatuses in the implementations of this application. To avoid redundancy, details are not described herein again.

Embodiments of this application further provide a computer-readable storage medium. All or some of the methods in the foregoing embodiments may be implemented by using software, hardware, firmware, or any combination thereof. If the methods are implemented in the software, functions may be used as one or more instructions or code and stored in the computer-readable medium or transmitted on the computer-readable medium. The computer-readable medium may include a computer storage medium and a communication medium, and may further include any medium that can transfer a computer program from one place to another. The storage medium may be any available medium that can be accessed by a computer.

It should be noted that, terms "system" and "network" in embodiments of the present invention may be used interchangeably. "A plurality of" means two or more. In view of this, "a physical of" may alternatively be understood as "at least two" in embodiments of the present invention. The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, division into the units is merely logical function division and may be other division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in embodiments.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by the computer, or a data storage device, for example, a server or a data center, integrating one or more available media. The available medium may be a read-only memory (read-only memory, ROM), a random access memory (random access memory, RAM), a magnetic medium such as a floppy disk, a hard disk, a magnetic tape, or a magnetic disk, an optical medium such as a digital versatile disc (digital versatile disc, DVD), or a semiconductor medium such as a solid-state disk (solid-state disk, SSD).

## Claims

1. A measurement method, comprising:
determining, by a terminal device, whether a measurement gap is involved when each of one or more measurement objects is measured in a first bandwidth part BWP group, wherein the first BWP group comprises an active BWP of one or more serving cells of the terminal device; and
performing, by the terminal device, measurement-gap-based measurement or non-measurement-gap-based measurement based on a determining result.

2. The method according to claim 1, wherein the performing, by the terminal device, measurement-gap-based measurement or non-measurement-gap-based measurement based on a determining result comprises:
performing, by the terminal device, non-measurement-gap-based measurement if none of the one or more measurement objects involves the measurement gap.

3. The method according to claim 1 or 2, wherein the performing, by the terminal device, measurement-gap-based measurement or non-measurement-gap-based measurement based on a determining result comprises:
performing, by the terminal device, measurement-gap-based measurement if at least one of the one or more measurement objects involves the measurement gap.

4. The method according to claim 3, wherein the performing, by the terminal device, measurement-gap-based measurement if at least one of the one or more measurement objects involves the measurement gap comprises:
if the at least one of the one or more measurement objects involves the measurement gap, determining, by the terminal device based on measurement gap information corresponding to the one or more measurement objects, a first measurement gap pattern for measuring the one or more measurement objects; and
performing, by the terminal device, measurement-gap-based measurement based on the first measurement gap pattern.

5. The method according to claim 4, wherein the measurement gap information corresponding to the one or more measurement objects comprises a measurement gap length MGL and a measurement gap repetition period MGRP of each of the one or more measurement objects, and the first measurement gap pattern comprises a first MGL and a first MGRP; and
if measurement of the one or more measurement objects supports switching between at least two measurement gap patterns, the determining, by the terminal device based on measurement gap information corresponding to the one or more measurement objects, a first measurement gap pattern for measuring the one or more measurement objects comprises:
determining, by the terminal device, the first MGL based on the MGL corresponding to the one or more measurement objects, and determining the first MGRP based on the MGRP corresponding to the one or more measurement objects.

6. The method according to claim 5, wherein the first MGL is a largest value in the MGL corresponding to the one or more measurement objects, and the first MGRP is a smallest value in the MGRP corresponding to the one or more measurement objects.

7. The method according to claim 4, wherein the measurement gap information corresponding to the one or more measurement objects comprises a measurement gap pattern of the one or more measurement objects; and
if measurement of the one or more measurement objects supports only switching between the no-measurement-gap measurement and the measurement-gap-based measurement that is performed based on a measurement gap pattern, the determining, by the terminal device based on measurement gap information corresponding to the one or more measurement objects, a first measurement gap pattern for measuring the one or more measurement objects comprises:
determining, by the terminal device based on the measurement gap information corresponding to the one or more measurement objects, that the first measurement gap pattern is the measurement gap pattern in the measurement gap information corresponding to the one or more measurement objects.

8. The method according to any one of claims 4 to 7, wherein before the determining, by the terminal device based on measurement gap information corresponding to the one or more measurement objects, a first measurement gap pattern for measuring the one or more measurement objects, the method further comprises:
receiving, by the terminal device, first indication information sent by a first network device, wherein
the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

9. The method according to any one of claims 4 to 8, wherein the method further comprises:
receiving, by the terminal device, second indication information sent by the first network device, wherein the second indication information indicates the measurement gap information corresponding to the one or more measurement objects.

10. The method according to any one of claims 1 to 9, wherein dual connections are established between the terminal device and both the first network device and a second network device, and the method further comprises:
sending, by the terminal device, measurement gap configuration information corresponding to a measurement object group to the first network device, wherein a measurement object in the measurement object group is configured by the second network device, and the measurement gap configuration information corresponding to the measurement object group comprises that measurement of the measurement object in the measurement object group does not involve the measurement gap, or comprises measurement gap information corresponding to the measurement object in the measurement object group.

11. The method according to any one of claims 1 to 10, wherein the dual connections are established between the terminal device and both the first network device and the second network device, and the method further comprises:
sending, by the terminal device, measurement indication information to the second network device, wherein the measurement indication information indicates that measurement performed by the terminal device on none of the one or more measurement objects in the first BWP group involves the measurement gap, or indicates the first measurement gap pattern used by the terminal device to measure the one or more measurement objects in the first BWP group.

12. A measurement method, comprising:
receiving, by a terminal device, first measurement indication information sent by a first network device, wherein the first measurement indication information indicates the terminal device to measure one or more measurement objects in a first BWP group without involving a measurement gap, or indicates a first measurement gap pattern to be used by the terminal device to measure one or more measurement objects in a first BWP group, and the first BWP group comprises an active BWP of one or more serving cells of the terminal device; and
performing, by the terminal device, measurement-gap-based measurement or non-measurement-gap-based measurement based on the measurement indication information.

13. The method according to claim 12, wherein the performing, by the terminal device, measurement-gap-based measurement or non-measurement-gap-based measurement based on the measurement indication information comprises:
performing, by the terminal device, non-measurement-gap-based measurement if the indication information indicates the terminal device to measure the one or more measurement objects in the first BWP group without involving the measurement gap.

14. The method according to claim 13, wherein the performing, by the terminal device, measurement-gap-based measurement or non-measurement-gap-based measurement based on the measurement indication information comprises:
performing, by the terminal device, measurement-gap-based measurement based on the first measurement gap pattern if the indication information indicates the first measurement gap pattern to be used by the terminal device to measure the one or more measurement objects in the first BWP group.

15. The method according to any one of claims 12 to 14, wherein dual connections are established between the terminal device and both the first network device and a second network device, and the method further comprises:
sending, by the terminal device, measurement gap information corresponding to the one or more measurement objects to the first network device, wherein the one or more measurement objects are configured by the second network device.

16. The method according to any one of claims 12 to 15, wherein the dual connections are established between the terminal device and both the first network device and the second network device, and the method further comprises:
sending, by the terminal device, second measurement indication information to the second network device, wherein the first measurement indication information indicates that measurement performed by the terminal device on the one or more measurement objects in the first BWP group does not involve the measurement gap, or indicates the first measurement gap pattern used by the terminal device to measure the one or more measurement objects in the first BWP group.

17. A scheduling method, comprising:
determining, by a first network device, whether a measurement gap is involved when a terminal device measures each of one or more measurement objects in a first bandwidth part BWP group; and
performing, by the first network device, measurement-gap-based scheduling or non-measurement-gap-based scheduling on the terminal device based on a determining result.

18. The method according to claim 17, wherein the performing, by the first network device, measurement-gap-based scheduling or non-measurement-gap-based scheduling based on a determining result comprises:
performing, by the first network device, non-measurement-gap-based scheduling on the terminal device if none of the one or more measurement objects involves the measurement gap.

19. The method according to claim 17 or 18, wherein the performing, by the first network device, measurement-gap-based scheduling or non-measurement-gap-based scheduling based on a determining result comprises:
performing, by the first network device, measurement-gap-based scheduling on the terminal device if at least one of the one or more measurement objects involves the measurement gap.

20. The method according to claim 19, wherein the performing, by the first network device, measurement-gap-based scheduling on the terminal device if at least one of the one or more measurement objects involves the measurement gap comprises:
if the at least one of the one or more measurement objects involves the measurement gap, determining, by the first network device based on measurement gap information corresponding to the one or more measurement objects, a first measurement gap pattern for scheduling the one or more measurement objects; and
performing, by the first network device, measurement-gap-based scheduling on the terminal device based on the first measurement gap pattern.

21. The method according to claim 20, wherein the measurement gap information corresponding to the one or more measurement objects comprises a measurement gap length MGL and a measurement gap repetition period MGRP of each of the one or more measurement objects, and the first measurement gap pattern comprises a first MGL and a first MGRP; and
if measurement performed by the terminal device on the one or more measurement objects supports switching between at least two measurement gap patterns, the determining, by the first network device based on measurement gap information corresponding to the one or more measurement objects, a first measurement gap pattern for scheduling the one or more measurement objects comprises:
determining, by the first network device, the first MGL based on the MGL corresponding to the one or more measurement objects, and determining the first MGRP based on the MGRP corresponding to the one or more measurement objects.

22. The method according to claim 21, wherein the first MGL is a largest value in the MGL corresponding to the one or more measurement objects, and the first MGRP is a smallest value in the MGRP corresponding to the one or more measurement objects.

23. The method according to claim 20, wherein the measurement gap information corresponding to the one or more measurement objects comprises a measurement gap pattern of the one or more measurement objects; and
if measurement performed by the terminal device on the one or more measurement objects supports only switching between non-measurement-gap-based measurement and measurement-gap-based measurement performed based on a measurement gap pattern, the determining, by the first network device based on measurement gap information corresponding to the one or more measurement objects, a first measurement gap pattern for scheduling the one or more measurement objects comprises:
determining, by the first network device based on the measurement gap information corresponding to the one or more measurement objects, that the first measurement gap pattern is the measurement gap pattern in the measurement gap information corresponding to the one or more measurement objects.

24. The method according to any one of claims 19 to 23, wherein the method further comprises:
sending, by the first network device, first indication information to the terminal device, wherein
the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

25. The method according to any one of claims 19 to 24, wherein the method further comprises:
sending, by the first network device, second indication information to the terminal device, wherein the second indication information indicates the measurement gap information corresponding to the one or more measurement objects.

26. The method according to any one of claims 16 to 25, wherein dual connections are established between the terminal device and both the first network device and a second network device, and the method further comprises:
receiving, by the first network device, measurement gap configuration information sent by the terminal device, wherein
a measurement object in a measurement object group is configured by the second network device, and the measurement gap configuration information corresponding to the measurement object group comprises that measurement of the measurement object in the measurement object group does not involve the measurement gap, or comprises measurement gap information corresponding to the measurement object in the measurement object group.

27. The method according to any one of claims 16 to 26, wherein the method further comprises:
sending, by the first network device, measurement indication information to the terminal device based on the determining result, wherein the measurement indication information indicates the terminal device to measure the one or more measurement objects in the first BWP group without involving the measurement gap, or indicates the first measurement gap pattern, and the first measurement gap information is used by the terminal device to measure the one or more measurement objects in the first BWP group

28. A scheduling method, comprising:
receiving, by a second network device, measurement indication information sent by a terminal device, wherein the measurement indication information indicates that measurement performed by the terminal device on none of one or more measurement objects in a first BWP group involves a measurement gap, or indicates a first measurement gap pattern used by the terminal device to measure one or more measurement objects in a first BWP group, and the first BWP group comprises an active BWP of one or more serving cells of the terminal device; and
performing, by the second network device, non-measurement-gap-based scheduling based on the measurement indication information, or performing measurement-gap-based scheduling based on the first measurement gap pattern.

29. The method according to claim 28, wherein the performing, by the second network device, non-measurement-gap-based scheduling based on the measurement indication information, or performing measurement-gap-based scheduling based on the first measurement gap pattern comprises:
performing, by the second network device, non-measurement-gap-based scheduling on the terminal device if the measurement indication information indicates that the measurement performed by the terminal device on none of the one or more measurement objects in the first BWP group involves the measurement gap.

30. The method according to claim 28 or 29, wherein the performing, by the second network device, non-measurement-gap-based scheduling based on the measurement indication information, or performing measurement-gap-based scheduling based on the first measurement gap pattern comprises:
performing, by the second network device, measurement-gap-based scheduling on the terminal device based on the first measurement gap pattern if the measurement indication information indicates the first measurement gap pattern used by the terminal device to measure the one or more measurement objects in the first BWP group.

31. A measurement apparatus, comprising a processing unit and a transceiver unit, wherein the processing unit is configured to:
determine whether a measurement gap is involved when each of one or more measurement objects is measured in a first bandwidth part BWP group, wherein the first BWP group comprises an active BWP of one or more serving cells of a terminal device; and
control, based on a determining result, the transceiver unit to perform measurement-gap-based measurement or non-measurement-gap-based measurement.

32. The apparatus according to claim 31, wherein in an aspect of the controlling, based on a determining result, the transceiver unit to perform measurement-gap-based measurement or non-measurement-gap-based measurement, the processing unit is specifically configured to:
control, if none of the one or more measurement objects involves the measurement gap, the transceiver unit to perform non-measurement-gap-based measurement.

33. The apparatus according to claim 31 or 32, wherein in the aspect of the controlling, based on a determining result, the transceiver unit to perform measurement-gap-based measurement or non-measurement-gap-based measurement, the processing unit is specifically configured to:
control, if at least one of the one or more measurement objects involves the measurement gap, the transceiver unit to perform measurement-gap-based measurement.

34. The apparatus according to claim 33, wherein in an aspect of the controlling, if at least one of the one or more measurement objects involves the measurement gap, the transceiver unit to perform measurement-gap-based measurement, the processing unit is specifically configured to:
if the at least one of the one or more measurement objects involves the measurement gap, determine, based on measurement gap information corresponding to the one or more measurement objects, a first measurement gap pattern for measuring the one or more measurement objects; and
control, based on the first measurement gap pattern, the transceiver unit to perform measurement-gap-based measurement.

35. The apparatus according to claim 34, wherein the measurement gap information corresponding to the one or more measurement objects comprises a measurement gap length MGL and a measurement gap repetition period MGRP of each of the one or more measurement objects, and the first measurement gap pattern comprises a first MGL and a first MGRP; and
if measurement of the one or more measurement objects supports switching between at least two measurement gap patterns, in an aspect of the determining, based on measurement gap information corresponding to the one or more measurement objects, a first measurement gap pattern for measuring the one or more measurement objects, the processing unit is specifically configured to:
determine the first MGL based on the MGL corresponding to the one or more measurement objects, and determine the first MGRP based on the MGRP corresponding to the one or more measurement objects.

36. The apparatus according to claim 35, wherein the first MGL is a largest value in the MGL corresponding to the one or more measurement objects, and the first MGRP is a smallest value in the MGRP corresponding to the one or more measurement objects.

37. The apparatus according to claim 36, wherein the measurement gap information corresponding to the one or more measurement objects comprises a measurement gap pattern of the one or more measurement objects; and
if measurement of the one or more measurement objects supports only switching between the no-measurement-gap measurement and the measurement-gap-based measurement that is performed based on a measurement gap pattern, in an aspect of the determining, based on measurement gap information corresponding to the one or more measurement objects, a first measurement gap pattern for measuring the one or more measurement objects, the processing unit is specifically configured to:
determine, based on the measurement gap information corresponding to the one or more measurement objects, that the first measurement gap pattern is the measurement gap pattern in the measurement gap information corresponding to the one or more measurement objects.

38. The apparatus according to any one of claims 34 to 37, wherein before the determining, based on measurement gap information corresponding to the one or more measurement objects, a first measurement gap pattern for measuring the one or more measurement objects, the transceiver unit is configured to receive first indication information sent by a first network device, wherein
the first indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

39. The apparatus according to any one of claims 34 to 38, wherein the transceiver unit is configured to receive second indication information sent by the first network device, wherein the second indication information indicates the measurement gap information corresponding to the one or more measurement objects.

40. The apparatus according to any one of claims 31 to 39, wherein the measurement apparatus is used in the terminal device, or the measurement apparatus is the terminal device; and dual connections are established between the terminal device and both the first network device and a second network device, and the transceiver unit is configured to send measurement gap configuration information corresponding to a measurement object group to the first network device, wherein a measurement object in the measurement object group is configured by the second network device, and the measurement gap configuration information corresponding to the measurement object group comprises that measurement of the measurement object in the measurement object group does not involve the measurement gap, or comprises measurement gap information corresponding to the measurement object in the measurement object group.

41. The apparatus according to any one of claims 31 to 40, wherein the measurement apparatus is used in the terminal device, or the measurement apparatus is the terminal device; and the dual connections are established between the terminal device and both the first network device and the second network device, and the transceiver unit is configured to send measurement indication information to the second network device, wherein the measurement indication information indicates that measurement performed by the terminal device on none of the one or more measurement objects in the first BWP group involves the measurement gap, or indicates the first measurement gap pattern used by the terminal device to measure the one or more measurement objects in the first BWP group.

42. A measurement apparatus, comprising:
a transceiver unit, configured to receive first measurement indication information sent by a first network device, wherein the first measurement indication information indicates the terminal device to measure one or more measurement objects in a first BWP group without involving a measurement gap, or indicates a first measurement gap pattern to be used by the terminal device to measure one or more measurement objects in a first BWP group, and the first BWP group comprises an active BWP of one or more serving cells of a terminal device; and
a processing unit, configured to control, based on the measurement indication information, the transceiver unit to perform measurement-gap-based measurement or non-measurement-gap-based measurement.

43. The apparatus according to claim 42, wherein in an aspect of the controlling, based on the measurement indication information, the transceiver unit to perform measurement-gap-based measurement or non-measurement-gap-based measurement, the processing unit is specifically configured to:
control, if the indication information indicates the terminal device to measure the one or more measurement objects in the first BWP group without involving the measurement gap, the transceiver unit to perform non-measurement-gap-based measurement.

44. The apparatus according to claim 43, wherein in the aspect of the controlling, based on the measurement indication information, the transceiver unit to perform measurement-gap-based measurement or non-measurement-gap-based measurement, the processing unit is specifically configured to:
control, based on the first measurement gap pattern if the indication information indicates the first measurement gap pattern to be used by the terminal device to measure the one or more measurement objects in the first BWP group, the transceiver unit to perform measurement-gap-based measurement.

45. The apparatus according to any one of claims 42 to 44, wherein the measurement apparatus is used in the terminal device, or the measurement apparatus is the terminal device; and dual connections are established between the terminal device and both the first network device and a second network device, and the transceiver unit is further configured to send measurement gap information corresponding to the one or more measurement objects to the first network device, wherein the one or more measurement objects are configured by the second network device.

46. The apparatus according to any one of claims 42 to 45, wherein the dual connections are established between the terminal device and both the first network device and the second network device, and the transceiver unit is further configured to send second measurement indication information to the second network device, wherein the first measurement indication information indicates that measurement performed by the terminal device on the one or more measurement objects in the first BWP group does not involve the measurement gap, or indicates the first measurement gap pattern used by the terminal device to measure the one or more measurement objects in the first BWP group.

47. A scheduling apparatus, comprising a processing unit and a transceiver unit, wherein the processing unit is configured to:
determine whether a measurement gap is involved when a terminal device measures each of one or more measurement objects in a first bandwidth part BWP group; and
control, based on a determining result, the transceiver unit to perform measurement-gap-based scheduling or non-measurement-gap-based scheduling on the terminal device.

48. The apparatus according to claim 47, wherein in an aspect of the controlling, based on a determining result, the transceiver unit to perform measurement-gap-based scheduling or non-measurement-gap-based scheduling, the processing unit is specifically configured to:
control, if none of the one or more measurement objects involves the measurement gap, the transceiver unit to perform non-measurement-gap-based scheduling on the terminal device.

49. The apparatus according to claim 47 or 48, wherein in the aspect of the controlling, based on a determining result, the transceiver unit to perform measurement-gap-based scheduling or non-measurement-gap-based scheduling, the processing unit is specifically configured to:
control, if at least one of the one or more measurement objects involves the measurement gap, the transceiver unit to perform measurement-gap-based scheduling on the terminal device.

50. The apparatus according to claim 49, wherein in an aspect of the controlling, if at least one of the one or more measurement objects involves the measurement gap, the transceiver unit to perform measurement-gap-based scheduling on the terminal device, the processing unit is specifically configured to:
if the at least one of the one or more measurement objects involves the measurement gap, determine, based on measurement gap information corresponding to the one or more measurement objects, a first measurement gap pattern for measuring the one or more measurement objects; and
control, based on the first measurement gap pattern, the transceiver unit to perform measurement-gap-based scheduling on the terminal device.

51. The apparatus according to claim 50, wherein the measurement gap information corresponding to the one or more measurement objects comprises a measurement gap length MGL and a measurement gap repetition period MGRP of each of the one or more measurement objects, and the first measurement gap pattern comprises a first MGL and a first MGRP; and
if measurement performed by the terminal device on the one or more measurement objects supports switching between at least two measurement gap patterns, in an aspect of the determining, by a first network device, based on measurement gap information corresponding to the one or more measurement objects, a first measurement gap pattern for scheduling the one or more measurement objects, the processing unit is specifically configured to:
determine the first MGL based on the MGL corresponding to the one or more measurement objects, and determine the first MGRP based on the MGRP corresponding to the one or more measurement objects.

52. The apparatus according to claim 51, wherein the first MGL is a largest value in the MGL corresponding to the one or more measurement objects, and the first MGRP is a smallest value in the MGRP corresponding to the one or more measurement objects.

53. The apparatus according to claim 50, wherein the measurement gap information corresponding to the one or more measurement objects comprises a measurement gap pattern of the one or more measurement objects; and
if measurement performed by the terminal device on the one or more measurement objects supports only switching between non-measurement-gap-based measurement and measurement-gap-based measurement performed based on a measurement gap pattern, in an aspect of the determining, based on measurement gap information corresponding to the one or more measurement objects, a first measurement gap pattern for scheduling the one or more measurement objects, the processing unit is specifically configured to:
determine, based on the measurement gap information corresponding to the one or more measurement objects, that the first measurement gap pattern is the measurement gap pattern in the measurement gap information corresponding to the one or more measurement objects.

54. The apparatus according to any one of claims 50 to 53, wherein the transceiver module is configured to send second indication information to the terminal device, wherein
the second indication information indicates that the measurement of the one or more measurement objects supports the switching between the at least two measurement gap patterns, or indicates that the measurement of the one or more measurement objects supports only the switching between the no-measurement-gap measurement and the measurement-gap-based measurement that is performed based on the measurement gap pattern.

55. The apparatus according to any one of claims 50 to 54, wherein the transceiver unit is configured to send second indication information to the terminal device, wherein the second indication information indicates the measurement gap information corresponding to the one or more measurement objects.

56. The apparatus according to any one of claims 47 to 55, wherein the scheduling apparatus is a first network device, or the scheduling apparatus is used in a first network device; and dual connections are established between the terminal device and both the first network device and a second network device, and the transceiver unit is configured to receive measurement gap configuration information sent by the terminal device, wherein
a measurement object in a measurement object group is configured by the second network device, and the measurement gap configuration information corresponding to the measurement object group comprises that measurement of the measurement object in the measurement object group does not involve the measurement gap, or comprises measurement gap information corresponding to the measurement object in the measurement object group.

57. The apparatus according to any one of claims 47 to 56, wherein the transceiver unit is configured to send measurement indication information to the terminal device based on the determining result, wherein the measurement indication information indicates the terminal device to measure the one or more measurement objects in the first BWP group without involving the measurement gap, or indicates the first measurement gap pattern, and the first measurement gap information is used by the terminal device to measure the one or more measurement objects in the first BWP group.

58. A scheduling apparatus, comprising:
a transceiver unit, configured to receive measurement indication information sent by a terminal device, wherein the measurement indication information indicates that measurement performed by the terminal device on none of one or more measurement objects in a first BWP group involves a measurement gap, or indicates a first measurement gap pattern used by the terminal device to measure one or more measurement objects in a first BWP group, and the first BWP group comprises an active BWP of one or more serving cells of the terminal device; and
a processing unit, configured to control, based on the measurement indication information, the transceiver unit to perform non-measurement-gap-based scheduling, or perform measurement-gap-based scheduling based on the first measurement gap pattern.

59. The apparatus according to claim 58, wherein in an aspect of the controlling, based on the measurement indication information, the transceiver unit to perform non-measurement-gap-based scheduling, or perform measurement-gap-based scheduling based on the first measurement gap pattern, the processing unit is specifically configured to:
control, if the measurement indication information indicates that the measurement performed by the terminal device on none of the one or more measurement objects in the first BWP group involves the measurement gap, the transceiver unit to perform non-measurement-gap-based scheduling on the terminal device.

60. The apparatus according to claim 58 or 59, wherein in the aspect of the performing non-measurement-gap-based scheduling based on the measurement indication information, or controlling, based on the first measurement gap pattern, the transceiver unit to perform measurement-gap-based scheduling, the processing unit is specifically configured to:
control, if the measurement indication information indicates the first measurement gap pattern used by the terminal device to measure the one or more measurement objects in the first BWP group, the transceiver unit to perform measurement-gap-based scheduling on the terminal device based on the first measurement gap pattern.

61. A terminal device, comprising a processor, wherein the processor is coupled to a memory, the memory is configured to store computer instructions, and the processor executes the computer instructions, to enable the communication device to perform the method according to any one of claims 1 to 16.

62. A network device, comprising a processor, wherein the processor is coupled to a memory, the memory is configured to store computer instructions, and the processor executes the computer instructions, to enable the communication device to perform the method according to any one of claims 17 to 30.

63. A communication system, wherein the system comprises the measurement apparatus according to any one of claims 31 to 46 and the scheduling apparatus according to any one of claims 47 to 57.

64. The communication system according to claim 63, wherein the system further comprises the scheduling apparatus according to any one of claims 58 to 60.

65. A computer-readable storage medium, wherein the computer-readable storage medium stores computer instructions, and the computer instructions instruct a communication device to perform the method according to any one of claims 1 to 30.

66. A circuit, comprising a processor and an interface, and configured to execute a computer program or instructions stored in a memory, to perform the method according to any one of claims 1 to 30.
